# EUROPEAN PATENT APPLICATION

(11) **EP 3 950 799 A1**
(43) Date of publication of application: **09.02.2022**
(21) Application number: 21190179.8
(22) Date of filing: 06.08.2021
(51) Int. Cl.: C08J 11/08, B29B 17/02

(54) **SOLVENT-BASED RECYCLING WITH A ROLL-TO-ROLL PROCESSING STEP**

(30) Priority: 07.08.2020 EP 20190071
(71) Applicant: APK AG, 06217 Merseburg (DE)
(72) Inventor: HANEL, Hagen, 04103 Leipzig (DE); WOHNIG, Klaus, 14052 Berlin (DE)
(74) Representative: Kilger, Ute

(57) **Abstract**

Subject-matter of the present invention is a method for removing at least one polymer component from plastic waste film material, wherein the plastic waste film material comprises at least a first polymer to be solved and a second polymer component, wherein the method comprises the steps of moving said plastic film material across at least one solvent bath which is filled with a solvent, wherein said solvent is a solvent for the first polymer component to be solved, and wherein at least the second polymer component is non-soluble in said solvent.

## Description

### Field of the invention

The present invention relates to the field of polymer recycling, particularly to a method for solvent based recycling with a roll-to-roll-processing step.

### Background

It is well known that plastic has a huge impact on the environment largely because it is in general not biodegradable. Each year several millions tons of plastic objects, such as plastic bags, pellets and plastic bottles, end up in the oceans and accumulate over time. Said plastic objects decompose very slowly and eventually form microplastics representing a huge environmental problem. Toxins such as DDT and BPA have been found to adhere to microplastics and aggravate said problem. Also onshore plastic waste can be found even in remote regions. Plastic waste, in particular microplastics, represents a danger to animal life and potentially to humans when meat or fish is consumed.

Plastic recycling offers a sustainable way of reducing the amount of plastic waste that is effectively produced and released into the environment. For this purpose various mechanisms of recycling plastic waste have been developed over time.

EP 0 359 106 A2 discloses a method of cleaning and recycling polluted plastics. In a closed system chips of plastic are washed in a washing solution and different types of plastic are separated. Then, the chips to be recycled are dried in a downstream stage. The discharge of harmful fumes is avoided and the solvent is treated and returned to the cycle.

DE 44 14 750 A1 relates to a process and an apparatus for cleaning viscose polymer melts possibly contaminated with paper, the impurities being segregated from the polymer melt by centrifuging.

DE 198 18 183 C2 relates to a method for separating the components of a product containing at least two plastic substances or a plastic substance and a metal substance. The product is heated to a softening temperature of a plastic substance, centrifuged at that temperature in the rotor of a centrifuge and then the plastic substance is disposed of separately.

EP 0 894 818 A discloses a process for the reclamation of soluble polymer or polymer mixtures from waste materials wherein (i) the polymer or polymer mixture is selectively dissolved from the polymeric material; (ii) unwanted insoluble components are optionally removed from the resulting solution; (iii) unwanted soluble components are optionally removed from solution; (iv) the polymer or polymer mixture is selectively precipitated by means of turbulent mixing with a precipitating agent in the presence of a gas or gas mixture; (v) separation of the precipitated polymer or polymer mixture from the liquid phase; and (vi) optionally drying the polymer or polymer mixture. Preferably further soluble polymer or mixture is dissolved from the separated insoluble components after separation from the resulting suspension and/or the insoluble components undergo a final water washing step. The polymer solution undergoes a chromatographic, preferably a gel permeation chromatography and/or solid phase extraction, preferably with carbon and/or a liquid-liquid extraction step.

DE 40 33 604 A1 relates to a recovery of soluble plastics from waste, wherein the plastic to be recovered is selectively dissolved out of the plastic-containing waste by suitable solvents. The thus obtained solution is injected into a container filled with a medium which is a non-solvent for the plastic. The temperature of this medium must in this case be above the boiling point of the solvent in which the plastic was dissolved. As a result, the solvent evaporates and the plastic to be recovered is released. The evaporated solvent is recovered. The precipitation of the plastic shall be quantitative in that one injects the plastic solution in a very high excess of a non-solvent for this plastic.

WO 2018/114046 A1 discloses a centrifuge for separating at least one solid from a waste material suspension the suspension comprising the solid and a polymer solution with at least one solvent and at least one plastic dissolved therein.

US 5,728,741 A discloses a process for recycling waste polymeric material comprising a mixture of waste polymeric material and includes the steps of granulating the chopped mixture into fragments at least about 100 times smaller than the size of the waste polymeric material; and extruding the ground mixture at a temperature of less than about the *T*_{g} of the lowest melting waste aliphatic polyamide polymeric material.

US 2007/0265361 A1 relates to a method for recycling polyesters or polyester mixtures from polyester-containing waste, in which the polyester or the polyester mixture is dissolved in a solvent and subsequently free-flowing particles are precipitated therefrom with a precipitant. The precipitant is chosen such that subsequent separation of precipitant and solvent is made possible in a simple manner.

US 2008/0281002 A1 relates to a method for recycling plastic materials which contain at least two polymers, copolymers or blends thereof based on polystyrene. The plastic material is thereby mixed with a solvent for the polymers, copolymers or blends. Subsequently a precipitation is effected by addition of a corresponding precipitant so that then the gelatinous precipitation product can be separated from the further components of the plastic material. The method is used for recycling of any plastic materials, in particular of plastic materials from electronic scrap processing and from shredder light fractions.

US 4,968,463 A discloses a process for making molded or extruded objects from waste containing plastic materials comprising preliminary physical processing of said waste, drying said waste, preheating to a temperature of from 80°C to 160°C, kneading at a temperature of from 120°C to 250°C, and injection molding or extrusion.

WO 2011/082802 A1 relates to a method of recycling waste material comprising at least one polymer and at least one material to be separated, in which a) at least one swelling agent is added to form a polymer gel, and b) at least one impurity which is not soluble in the is separated from the polymer gel by means of filtration or sedimentation.

WO 2017/013457 A1 discloses a processing apparatus for processing waste material comprising thermoplastic material, particularly for processing crushed waste material, the processing apparatus comprising a drying apparatus - adapted for drying the waste material by means of an air flow, a melting apparatus adapted for melting the waste material being subjected to drying by the drying apparatus, a sterilizing apparatus adapted for applying sterilizing heat treatment of the waste material subjected to melting by the melting apparatus, a heat recovery channel extending between the drying apparatus and the melting apparatus, and a draining channel adapted for draining of fluid generated in the drying apparatus during drying, connected to the drying apparatus and to a flue of the melting apparatus.

WO 1993/001036 A1 discloses a method of processing polyolefin waste material, wherein extraction is used to remove the foil ingredients and polyethylene waxes without dissolving the plastic material.

WO 2017/003804 A1 discloses a process for purifying polyethylene, wherein impurities from the polymer matrix are removed via extraction without dissolving the plastic material.

Some of the recycling techniques described above shred particles and immediately melt them for extrusion. However, this requires waste material of a high purity or results in polymer pellets and polymer products of low quality.

Other recycling techniques are solvent-based methods, wherein the target polymer is transferred to a solution. An advantage of this method is that isolation of a target polymer is mostly easier if plastic waste is transferred into a solution or suspension. However, in addition to the target polymer numerous undesired impurities are transferred to the solution as well. When the polymer solution is concentrated and the solvent is removed, e. g. through evaporation and/or extrusion, the impurities still remain in the mixture together with the target polymer. Consequently, the resulting recycled polymer material, e.g. obtained in a form of pellets or granulates, will contain these impurities. The quality of such contaminated material is subsequently lower compared to a virgin polymer, what restricts its further applications. For example, recycled polymeric materials containing toxic impurities cannot be used for packaging food.

Some of the methods of the prior art try to solve the issue by means of washing the plastic material with a liquid or solid-liquid extraction in order to reduce the content of impurities prior to the dissolution step. However, with these methods it is hardly achievable to obtain a polymer essentially free of undesired impurities. An extractant used to remove undesired components needs to penetrate into a polymer matrix what can be easily achieved for the surface regions, but is quite complicated for the inner area. As a result, mainly the surface area impurities are removed, whereas the inner parts of the polymer matrix still contain a significant amount of impurities.

Other recycling techniques dissolve polymers, but the recovery of polymers from a solution represents a challenge. If plastic waste is transferred into a solution or suspension this can help in isolation a polymer that is dissolved. Some polymers float in water and non-floating objects can be separated. Other polymers dissolve in suitable solutions. In the latter case solvent may be removed by evaporation or precipitation. However, said processes require a lot of energy and considering the worldwide production of several hundred million tons of plastic each year even small energy reductions in the recycling process may have a huge impact. Also often small molecule impurities are not removed if said small molecules have a high boiling point. Also when new polymers are produced by polymerization reactions the removal of solvent can be a challenge in view of the above problems associated with prior art.

Pure polymers often demonstrate poor resistance to external factors (such as extreme temperatures or mechanical stress) during their processing or end-use application. In order to improve stability, processability of polymers, enhance the service life of the polymer product certain additives are commonly added to polymer matrix.

Polymer additives can be classified as polymer stabilizers or functional agents. Polymer stabilizers are essential to practical use, because they help to maintain the inherent properties and other characteristics of plastic material by suppressing the oxidative degradation promoted by high temperature and ultraviolet exposure during use. Functional additives are added to enhance the mechanical strength of plastics or impart new functional properties, such as flexibility or flame retardancy, hence expanding the scope of application of plastics and increasing their commercial value.

In the context of the present invention, the following additives are known from the prior art:

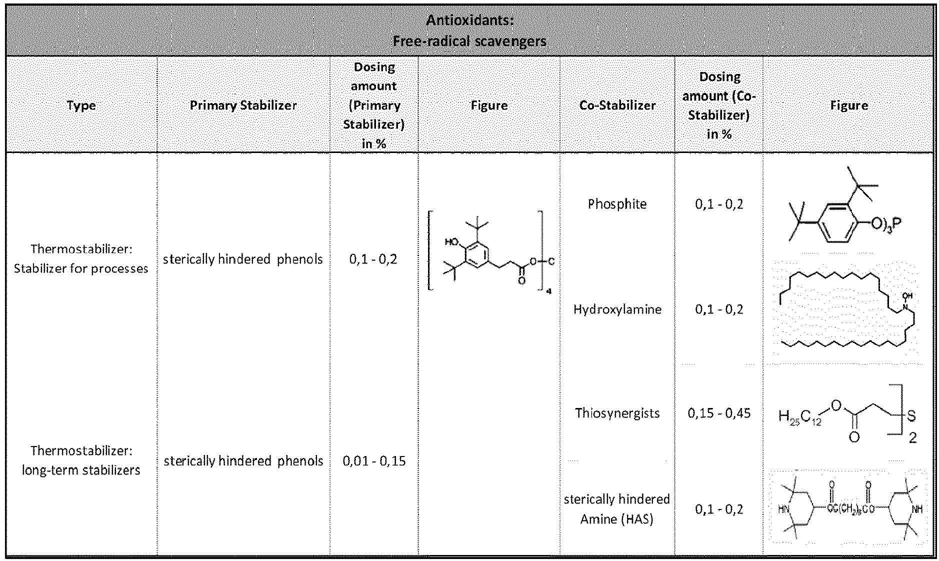

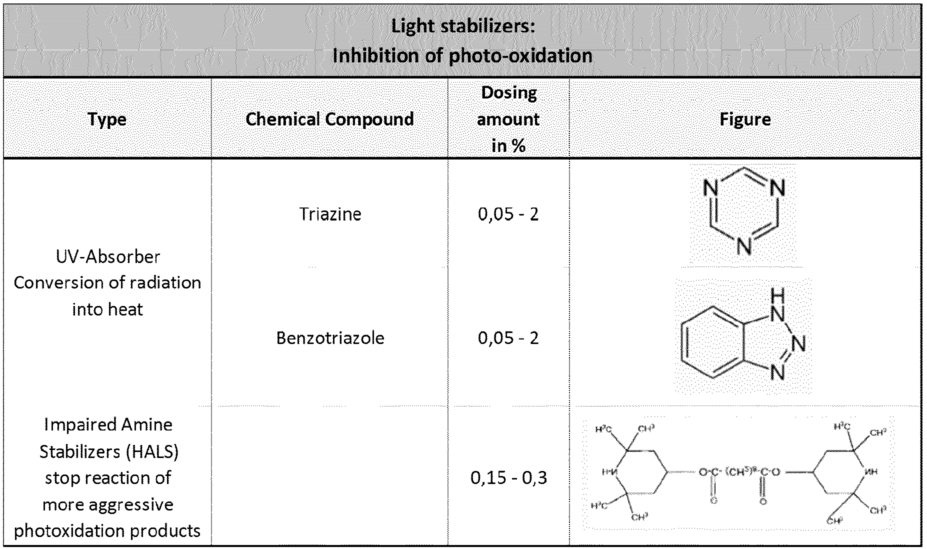

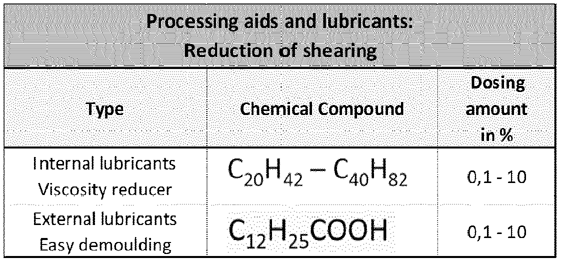

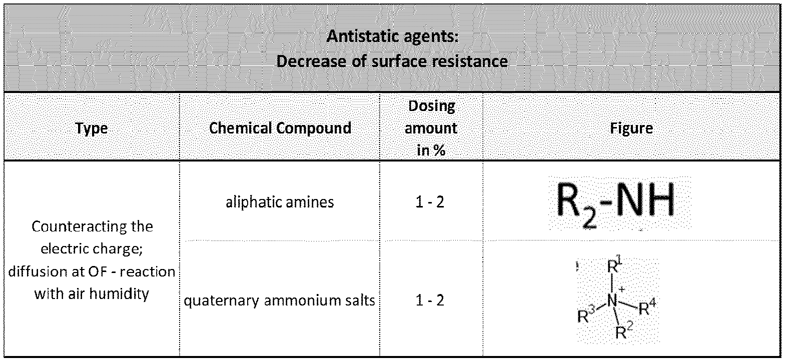

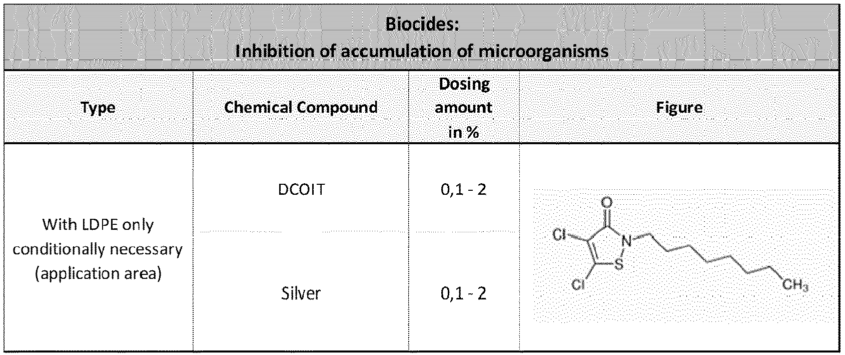

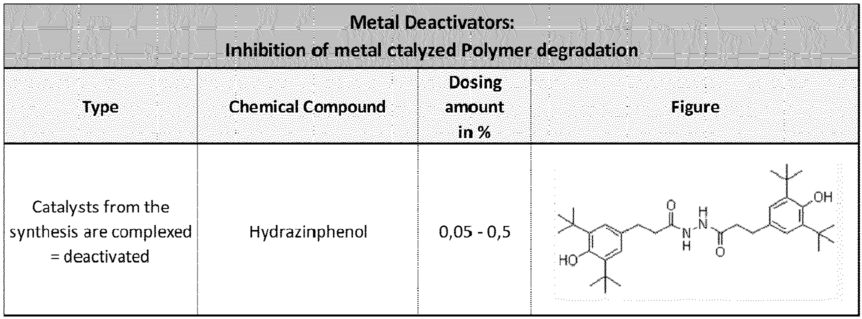

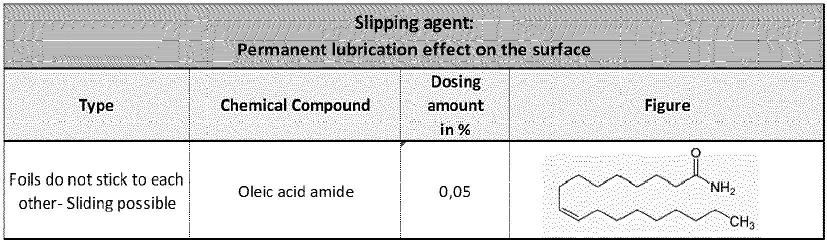

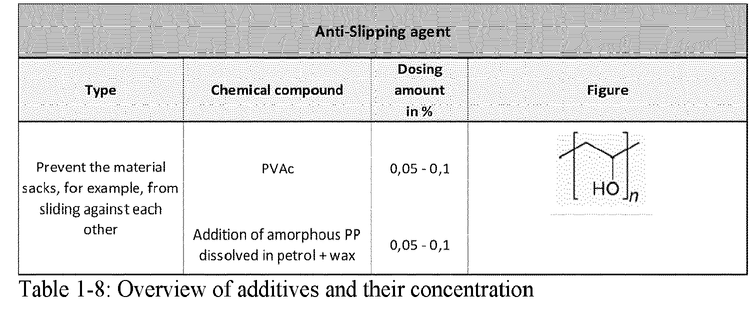

Post-consumer plastic is often unusable in the form in which it arises or is collected. One of the main problems in post-consumer plastics recycling is degradation of polymers during their lifetime. In order to ensure that a recycled material may possess the necessary quality to guarantee long-term stability for the intended application, addition of certain chemicals is often necessary. There is a variety of additives available for this purpose, e.g. antioxidants, light stabilizers, color hold agents, etc.

The recycling techniques of the prior art attempt to diminish negative effects of polymer degradation by addition of stabilizers. However, these re-stabilization techniques lack to achieve perfect distribution of solid additives in the polymer matrix. Therefore the final recycled product contains the regions with different concentrations of the additives. There are some regions which are over-saturated with the stabilizers, whereas certain regions contain the additives in insufficient quantities. Consequently, some parts of the recycled plastic material are more exposed to oxidative degradation promoted by high temperatures and UV-irradiation. The problem may be solved by adding the additives in higher quantities so that every region of the recycled product contains a sufficient quantity to ensure long-term stability for the intended application. However, this approach inevitably increases the costs of the recycling process. In addition, on the one hand, presence of stabilizers in polymer matrix in higher quantities improves stability of the recycled product, but on the other hand it may have negative impact on mechanical properties of polymers, if the additives interfere with the polymer matrix so much that alignment of the molecular chains to build a regular structure is hindered to some extent. Also, some additives are hazardous compounds and adding those in higher quantities may be impossible at all. At present the methods of the prior art do not provide plastic waste recycling techniques which would allow optimal dosage and distribution of solid functional auxiliaries.

Downsizing plastic material derived from plastic waste, due to cutting or shredding processes prior to solution-based recycling process of polymers, creates a lot of fine dust particles that are not dissolved, and thus are not only not included into the solvent-based recycling process, but also compromise the quality of the recycling end product. It is therefore also an object of the present invention to improve the efficiency of incorporation of plastic waste into solvent-based recycling processes, as well as improve the quality of the recycling end product, wherein essentially all of the polymer provided to the downstream recycling process, comprising dissolving polymers in solvents, is included, and wherein the quality of the recycling end product is improved.

Prior art in the field of plastic shredding and sorting is as follows.

FR2881676 (A1) discloses a process for the treatment of heterogeneous waste composed of optical disks and their packaging to produce high purity polymer granules.

WO 02/04185 discloses a process for sorting plastic elements consisting of selecting by opto-mechanical means the plastic elements satisfying criteria, for example on transparency.

WO 04/04997 discloses a process for sorting waste from the automotive, computer or other industries in order to constitute a set of highly concentrated polymers for recovery. This process consists of successively sorting the waste by sieving, gas flow, and grinding the waste and then further sorting of the polymer fraction by gas flow.

WO 03/86733 discloses a process for sorting plastics, in particular using pretreatments (grinding), sorting by density, by size, by color (optical sorting).

CN202984061 (U) discloses an automatic de-dusting and sieving device for a particle material.

CN207616963 (U) discloses a plastic toy waste pulverizing device with dust removing function.

US4121514 (A) discloses dust and very small particles are drawn through the vacuum fan and collected in a filter bag, presumably before shredding of aluminium waste.

DE3932366 (A1) discloses a process for the extraction of material-containing solid components from shredded material by air classification.

### Detailed description of the invention

Before describing the invention in detail, it is deemed expedient to provide definitions for certain technical terms used throughout the description. Although the present invention will be described with respect to particular embodiments, this description is not to be construed in a limiting sense. Before describing in detail exemplary embodiments of the present invention, definitions important for understanding the present invention are given.

### Definitions

As used in this specification and in the appended claims, the singular forms of "a" and "an" also include the respective plurals unless the context clearly dictates otherwise.

In the context of the present invention, the terms "about" and "approximately" denote an interval of accuracy that a person skilled in the art will understand to still ensure the technical effect of the feature in question. The term typically indicates a deviation from the indicated numerical value of ± 20 %, preferably ± 15 %, more preferably ± 10 %, and even more preferably ± 5 %.

It is to be understood that the term "comprising" is not limiting. For the purposes of the present invention the term "consisting of' is considered to be a preferred embodiment of the term "comprising of'. If hereinafter a group is defined to comprise at least a certain number of embodiments, this is meant to also encompass a group which preferably consists of these embodiments only.

Furthermore, the terms "first", "second", "third" or "(a)", "(b)", "(c)", "(d)" etc. and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In case the terms "first", "second", "third" or "(a)", "(b)", "(c)", "(d)" etc. relate to steps of a method or use there is no time or time interval coherence between the steps, i.e. the steps may be carried out simultaneously or there may be time intervals of seconds, minutes, hours or even days between such steps, unless otherwise indicated in the application as set forth herein above or below.

As used herein the term "average temperature" refers to a temperature that is averaged over time, preferably over the duration of the corresponding step. In a continuous system the duration of a step refers to the average time of the waste material under the conditions as described for said step. There may be location dependent variations within the solvent that can be reduced by stirring. In said case the temperature should also be averaged over said locations to determine the average temperature. With sufficient stirring the average temperature usually is only location dependent to a small degree and the average temperature can be determined by measuring in one spot for the duration of a step.

As used herein the term "peak temperature" refers to a maximum temperature that is achieved during a step. It may be determined by continuously monitoring the temperature and selecting the maximum temperature. For example with a batchwise implementation of steps the temperature may drop, e.g. when cold plastic waste is inserted into the solvent. A heating system may heat the vessel to achieve said peak temperature before the solvent is lead to the next step. In a continuous system the temperature may be constant and there often is no difference between "average temperature" and "peak temperature". There also may be location dependent variations within the solvent and in said case the temperature may be averaged over said locations (not over time) to determine the peak temperature.

As used herein the term "several" refers to two, three, four or more entities, preferably two or three entities.

In the context of the present invention, post-industrial plastic comes from a variety of resins. Polystyrene (PS) Low-density Polyethylene (LDPE), Polypropylene (PP), Nylons, Acrylonitrile Butadiene Styrene (ABS) are just a few of the plastic polymers that can be recycled and reused. Post-industrial plastic waste is already generated during manufacture or production, and therefore has the advantage of being able to be collected in its pure form.

As used herein the term "solvent" refers to a single solvent or a mixture of different solvents. A single solvent may facilitate recovery whereas a mixture may reduce the use of toxic solvents or accelerate dissolution of a polymer.

As used herein the term "target polymer" refers to a single polymer or a mixture of different polymers. Polymers also include copolymers and block polymers. Often a mixture of polymers cannot be avoided completely. Preferably the term "target polymer" refers to a single polymer or a mixture of different polymers that are dissolvable in the solvent as described for step ii) and may be used for producing polymer pellets. In some instances "target polymer" refers to a mixture of one, two or three polymers as a major component, wherein impurities are possible that have a weight of less than 5 % by weight compared to the total weight of the target polymer. Furthermore, use of the term "target polymer" is to be understood in the above way also when "a target polymer", "the target polymer" or "said target polymer" is mentioned unless it is explicitly stated that it is only a single polymer or a mixture of different polymers, i.e. "a target polymer" is "at least one target polymer"; "the target polymer" is "the at least one target polymer" and "said target polymer" is "said at least one target polymer" unless stated otherwise. A non-target polymer may also be a polymer that is not dissolvable in the used solvent and it may be removed in step ii) by solid-liquid separation.

As used herein the term "plastic waste" refers to waste comprising plastic. Preferably plastic waste is any substance that is discarded after primary use, and/or has been discarded, e.g. because it is defective. In some embodiments the "plastic waste" is solid. In some embodiments "plastic waste" refers to municipal solid waste, in particular comprising everyday items that are discarded by the public. In some embodiments "plastic waste" refers to post-consumer use polymers, post-industrial use polymers and combinations thereof.

As used herein the term "mixed plastic waste" refers to plastic waste containing different kinds of plastic objects. Often plastic is sorted before it is used, e.g. only plastic bags are provided or only plastic foils. This usually requires a sorting of plastic. In some instances mixed plastic waste is municipal plastic waste as obtained from households, i.e. plastic bags, plastic packaging, plastic tubes and such can be mixed. It was found that mixed plastic waste can be used to produce polymer in accordance with the invention without need of collection in groups of identical materials and/or objects.

As used herein the term "essentially soluble" with respect to the target polymer refers to the solubility of said target polymer in said solvent or said mixture of solvents in an amount not less than 5 wt%, more preferably not less than 7 wt%, in particular not less than 10 wt%, with respect to the total weight of said solvent or mixture of solvents and the of polymer that is dissolved.

As used herein the term "essentially insoluble" with respect to the additive refers to the solubility of said target polymer in said solvent or said mixture of solvents an amount of less than 1 wt%, in particular less than 0.5 wt%, in particular less than 0,1 wt% with respect to the total weight of said solvent or mixture of solvents and the of polymer that is dissolved.

As used herein the term "non-solvent" with respect to said extractant refers to the solubility of said target polymer in said extractant an amount of less than 1 wt%, in particular less than 0.5 wt%, with respect to the total weight of the extractant and the polymer that is dissolved.

As used herein the term "essentially immiscible" refers to the liquids that are substantially incapable of dissolving into each other and form a multiphasic system, in particular biphasic system, wherein each phase contains at least 90%, preferably at least 95%, more preferably at least 99.0%, in particular at least 99.5% of a single fluid The boundary between the phases is determined in particular by a visual inspection.

As used herein the term "essentially different densities" refers to liquids, wherein the densities of said liquids differ by more than 0,05 g/cm³, in particular by more than 0,10 g/cm³.

As used herein the term "extractant" refers to a liquid which is a non-solvent for the target polymer.

As used herein the term "alkanes" refers to straight chain hydrocarbons having from 5 to 20 carbon atoms, typically from 5 to 12 carbon atoms. Examples include, but not limited to n-hexane, n-heptane, n-octane and n-nonane.

As used herein the term "iso-alkanes" refers to branched chain hydrocarbons having from 5 to 20 carbon atoms, typically from 5 to 12 carbon atoms. Examples include, but not limited to isooctane.

As used herein the term "cyclic alkanes" refers to cyclic, saturated hydrocarbons wherein each of the atoms forming the ring (i.e. skeletal atoms) is a carbon atom. Cyclic alkanes may be optionally substituted by an alkyl group having from 1 to 4 carbon atoms. Examples include, but not limited to cyclohexane, methylcyclohexane.

As used herein the term "ketones" refers to organic compounds having a carbonyl group linked to a carbon atom. Examples include, but not limited to acetone, butanone.

As used herein the term "organic acids" refers to organic compounds having a functional group of formula C(=O)OH. Examples include, but not limited to formic acid, acetic acid.

As used herein the term "ester" refers to organic compounds having a functional group of formula C(=O)OR, wherein R represents an alkyl group. Examples include, but not limited to ethyl acetate, benzy lacetate.

The "number average molecular weight" is preferably the total weight of the respective polymer sample, e.g. the target polymer, divided by the number of polymer molecules in the sample. The "average molecular mass" may be determined according to ISO 16014-1:2012 and/or ISO 16014-2:2012, preferably by ISO 16014-1:2012.

As used herein the term "essentially perpendicular orientation" refers to an orientation that differs no more than 20°, in particular no more than 10°, preferably no more than 5°, from an exactly perpendicular orientation. As used herein the term "essentially parallel orientation" refers to an orientation that differs no more than 20°, in particular no more than 10°, preferably no more than 5°, from an exactly parallel orientation.

As used herein the term "rolled material" refers to a plastic film wound cylindrically about a center axis, but permitting the removal of material from the center or inner periphery of roll.

Herein below, various embodiments of the invention are explained in more detail. Wherever respective alternatives in terms of ingredients in compositions, concentrations of ingredients, periods of time, frequencies are mentioned, the person skilled in the art would immediately understand that individual combinations can be made as long as these are technically possible or if not otherwise explicitly indicated.

It is an object of the present invention to provide an improved method for recycling a plastic material, in particular plastic waste, based on dissolving of a first target polymer with a subsequent liquid-liquid extraction. This method enables to eliminate those impurities which are caged between the polymer chains, what is possible only in the case when the polymeric is dissolved. While being dissolved, the distance between polymer chains is increasing, what helps to release the impurities into the solution. The undesired components are removed by means of liquid-liquid extraction. As a result, a polymeric material essentially free of impurities is obtained. The quality of the material processed in such a way is comparable to virgin polymers. Consequently, the resulting recycled polymer material can be reused without substantial restrictions. Furthermore, this method is less demanding to the quality of a feed material, what enables recycling more complex multi-component structures, e.g. colored plastics. Dyed and pigmented plastics are commonly troubling for materials recovery facilities as they have a much lower market value and are more difficult to recycle. Clear plastics are always preferred in the recycled materials market, mainly since transparent plastic can typically be dyed with greater flexibility. The problem can be solved by introduction of an additional pre-sorting step, what however, significantly increases the costs of recycling process. With said method undesired colorants can be efficiently removed by means of liquid-liquid extraction. With said method also other undesired impurities, e.g. odor causing substances or thermal stabilizers, can be efficiently removed. For example, degradation products of fatty acids may be responsible for unpleasant odor of a plastic material, what limits its further using in food packaging. Ultimately reducing the amount of impurities has positive impact on mechanical properties and processability of the recycled material. It is also an object of the present invention to provide a plastic waste recycling system for recycling plastic waste comprising a target polymer.

Subject-matter of the present application is a method for removing at least one polymer component from plastic waste film material, wherein the plastic waste film material comprises at least a first polymer component to be solved and a second polymer component, wherein the method comprises the steps of
Moving the plastic film material across at least one solvent bath, which is filled with a solvent, wherein the solvent is a solvent for at least the first polymer component to be solved, and wherein at least the second polymer component is non-soluble in the solvent.

In one embodiment the present invention relates to a method for removing at least one polymer component from plastic waste film material, wherein the plastic waste film material comprises at least a first polymer component to be solved and a second polymer component, wherein the method comprises the steps of
Moving the plastic film material across at least one solvent bath, which is filled with a solvent, wherein the solvent is a solvent for at least the first polymer component to be solved, and wherein at least the second polymer component is non-soluble in the solvent, wherein said plastic film material is rolled material,
and wherein said plastic film material is being passed by at least a rolling drum across at least one bath which is filled with the solvent.

Another embodiment of the present invention relates to a method for at least partially removing at least one polymer component from plastic waste film material, wherein the plastic waste film material comprises at least one first polymer component to be solved and/or at least one second polymer component, wherein said plastic film material is being passed across at least one rinsing bath, wherein the method comprises the following steps:
1. Providing said plastic waste film material, in particular plastic films and/or foils;
2. Optional step: Preparing said plastic film material by mechanical pretreatment including a washing step;
   Moving said plastic film material across at least one rinsing bath, which is filled with a certain solvent/extractant, wherein said solvent/extractant is a solvent for the first polymer component to be solved, wherein said second polymer component is non-soluble in said solvent/extractant in order to enrich the plastic film material with the second polymer component.
3. Solving at least the first polymer component from the plastic film material with that solvent/extractant/aqueous solution in said rinsing bath.

Another embodiment of the present invention relates to a method for at least partially removing at least one polymer component from plastic waste film material, wherein the plastic waste film material comprises at least one first polymer component to be solved and/or at least one second polymer component, wherein said plastic film material is being passed across at least one rinsing bath, wherein the method comprises the following steps:
(i) Providing said plastic waste film material, in particular plastic films and/or foils;
(ii) Optional step: Preparing said plastic film material by mechanical pretreatment including a washing step;
(iii) Moving said plastic film material across at least one rinsing bath, which is filled with a certain solvent/extractant, wherein said solvent/extractant is a solvent for the first polymer component to be solved, wherein said second polymer component is non-soluble in said solvent/extractant in order to enrich the plastic film material with the second polymer component, wherein said plastic film material is rolled material,
   and wherein said plastic film material is being passed by at least a rolling drum across at least one bath which is filled with the solvent.
(iv) Solving at least the first polymer component from the plastic film material with that solvent/extractant/aqueous solution in said rinsing bath.

Another embodiment of the present invention relates to a method, wherein the plastic film material is subject to mechanical pretreatment including a washing step.

Another embodiment of the present invention relates to a method, wherein the plastic film material is subject to mechanical pretreatment including a perforation with a needle roller.

Another embodiment of the present invention relates to a method comprising a step of decolorization of the solved first polymer component.

One embodiment of the present invention relates to a method for at least partially removing at least one polymer component from plastic waste film material, wherein said plastic film material is rolled material.

Another embodiment of the present invention relates to said method, wherein said plastic film material is being passed by at least a rolling drum across at least one bath which is filled with the solvent and/or mixtures thereof.

Another specific embodiment of the present invention relates to said method, wherein said plastic film material is being passed by at least 4 rolling drums across at least one bath which is filled with a certain solvent and/or mixtures thereof.

Another embodiment of the present invention relates to said method, wherein said plastic film material is being passed by at least 4 rolling drums across at least one bath, wherein said rolling drums are designed towards each other to move said plastic film material in a continuous flow across said at least one bath.

One embodiment of the present invention relates to said method, wherein said plastic film material which is enriched with the second polymer component is delivered from the rolling drums to an extruder.

A further embodiment of the present invention relates to said method, wherein the solvent is separated from the solved first polymer component by thermal solvent separation, mechanical solid-liquid separation, cross-flow filtration and/or Flash evaporation.

In another embodiment of the present invention the step of preparing said plastic film material by mechanical pretreatment (step ii) includes a washing step, wherein it depends on the degree of contamination of the input (plastic film material). Post-consumer waste, if it is available as roll/track waste, needs to be pre-treated by washing. In case of scrap material, no separate pre-treatment is necessary since it is clean.

One embodiment of the present invention relates to said method, wherein said plastic film material is selected from the group comprising plastic waste, post-industrial use polymers and combinations thereof, complex plastics comprising numerous polymeric and non-polymeric components, plastic films, multilayer films, polymer multilayer films, foils, plastic foils, multilayer foils, trays, plastic trays, multilayer trays, plastic composites, metal-plastic composites, paper-metal plastic composites, paper-plastic composites.

Another embodiment of the present invention relates to a method wherein said plastic film material is rolled material.

Another embodiment of the present invention relates to a method wherein said plastic film material is rolled material, wherein said plastic film material is being passed by at least a rolling drum across at least one bath which is filled with the solvent.

Another embodiment of the present invention relates to said method, wherein said plastic film is a polymeric film.

One specific embodiment of the present invention relates to said method, wherein said film is a multilayer film.

Another embodiment of the present invention relates to said method, wherein said plastic film comprises at least two layers.

One embodiment of the present invention relates to said method, wherein said film comprises polymeric components and at least one metal layer.

Another embodiment of the present invention relates to said method, wherein said plastic film material is selected from the group comprising PE/Al/PET, PE/PET, PE/PA, PE/PP, and/or a combination of polymer/polymer, polymer/metal, polymer/metal/polymer etc.

Another specific embodiment of the present invention relates to said method, wherein said multilayer film comprises at least two layers, polymer/polymer or polymer/metal.

Another embodiment of the present invention relates to said method, wherein said layers of the multilayer film are selected from the group comprising a layer of polymeric components, metal layers, paper layers and combinations thereof.

Another embodiment of the present invention relates to said method, wherein said first polymer component to be solved is selected from the group comprising polymeric components, additives, impurities, metal components, printing inks, adhesives.

One embodiment of the present invention relates to said method, wherein said non-soluble second polymer component is selected from the group comprising secondary components, auxiliary components, polymeric components, additives, impurities, metal components, printing inks, adhesives.

Another embodiment of the present invention relates to said method, wherein the remaining second polymer component is mechanically stable enough to be pulled through the process by the rolling drums.

Another embodiment of the present invention relates to said method, wherein the polymer film is being passed by rolling drums, wherein while moving, the film passes at least one bath with a certain solvent, in which the at least first polymer component is dissolved.

For example, if the film comprises the components A, B and C, the solvents are selected so that only the components A and B are dissolved, whereas no dissolution of the component C occurs. In the final stage, the film is moving across a rinsing bath. The film enriched with the polymer component C is delivered to an extruder.

In another embodiment of the present application, the baths with certain solvents and/or mixtures thereof can be substituted with sprayers which wash out the first polymer component of the film.

Another embodiment of the present invention relates to said method, wherein said bath and the space above said bath are arranged in a gas-tight system.

In another embodiment, the bath is located in a tight room to control the solvent vapours or alkaline/acidic atmosphere above the bath.

Another embodiment of the present invention relates to said method, wherein the solvent of the least one bath is selected from the group comprising ketones, esters, organic acids, water and/or mixtures thereof.

Another embodiment of the present invention relates to said method, wherein the solvent of the least one bath is an aqueous solution and/or mixtures thereof.

In another preferred embodiment of the present invention the solvent of the least one bath is an aqueous solution, wherein said aqueous solution is selected from the group comprising acids and bases, preferably NaOH, NH3, HCl, HNO3, acetic acid and/or mixtures thereof.

In the context of the present application, NaOH is able to dissolve metal layers which are used in polymer-metal combinations, for example, aluminum. In one specific embodiment of the present application, aluminium is dissolved in NaOH and/or a mixture of NaOH with other solvents.

One embodiment of the present invention relates to said method, wherein the first polymer component is a thermoplastic polymer.

In one embodiment said thermoplastic polymer is selected from the group comprising polyolefins, polyamide (PA) and combinations thereof.

In some embodiments the thermoplastic polymer is selected from the group consisting of polystyrene (PS), in particular expanded polystyrene (EPS), polyethylene (PE), polypropylene (PP), polyvinyl chloride (PVC), polyamide (PA), Styrene-acrylonitrile resin (SAN), acrylonitrile styrene acrylate (ASA), polyoxymethylene (POM), polybutylene terephthalate (PBT), polycarbonate (PC), acrylonitrile butadiene styrene (ABS) and polyethylene terephthalate (PET). A particularly suitable thermoplastic target polymer is polyethylene (PE), in particular low-density polyethylene (LDPE) and/or high-density polyethylene (HDPE), and/or mixtures thereof.

In some embodiments the first polymer component has an average molecular mass of 50 to 20.000 kDa, in particular of 100 to 4.000 kDa, in particular preferred of 200 to 2.000 kDa. In some embodiments the target polymer has a number average molecular weight of 50 to 20.000 kDa, in particular of 100 to 4.000 kDa, in particular preferred of 200 to 2.000 kDa.

Besides the first target polymer other non-target polymers may be present. Preferably non-target polymers dissolve in the solvent under the conditions of step iv) or have a higher solubility under said conditions than the first target polymer. If for example plastic waste is recycled the non-target polymers are preferably present to a lesser degree than the first target polymer. Preferably non-target polymers are dissolved in an amount of less than 1 wt%, in particular less than 0.5 wt%, with respect to the total weight of the solvent and the polymer that is dissolved.

In some embodiments the thermoplastic polymer is dissolved in said solvent or said mixture of solvents in an amount not less than 5 wt%, more preferably not less than 7 wt%, in particular not less than 10 wt%, with respect to the total weight of said solvent or mixture of solvents and the polymer that is dissolved.

In the context of the present invention, thermoplastic relates to a plastic polymer material that becomes pliable or moldable at a certain elevated temperature and solidifies upon cooling. Monomers that make up thermoplastic polymers make them so special since the monomers come together via van der Waals forces that weakly attract neutral molecules to each other. These repeating units arrange themselves in such a way that thermoplastic polymer molecules look like many strands of pearls mixed together.

One specific embodiment of the present invention relates to said method, wherein the thermoplastic polymer is a polyolefin, in particular low-density polyethylene (LDPE).

Another embodiment of the present invention relates to said method, wherein the first polymer is selected from the group comprising polyolelfins, polyamide (PA) and combinations thereof.

One embodiment of the present invention relates to said method, wherein the first polymer is selected from the group comprising low-density polyethylene (LDPE), polypropylene (PP), high density polyethylene (HDPE), polyamide (PA), and/or mixtures thereof.

Another embodiment of the present invention relates to said method, wherein the rolling drums are selected from the group comprising metal drums, solid plastic drums, polymer drums, wherein the drums can be further coated on the surface.

Another specific embodiment of the present invention relates to said method, wherein the metals of which the rolling drums are made of are selected from the group comprising steel, stainless steel, aluminium, titanium.

One embodiment of the present invention relates to said method, wherein the coating of the surface of the rolling drums is selected from the group comprising polymer layer like PFE, Polyamide, PTFE and/or mixtures thereof.

Another embodiment of the present invention relates to said method, wherein the first rolling drum is a needle/perforate drum which is used for perforating the plastic film/material. In the context of the present invention, the first roll is designed as a needle roll so that the film can be perforated to increase the specific surface area for dissolution/etching.

Another specific embodiment of the present invention relates to said method, wherein the line speed of the rolling drums is 30 cm/min, preferably 45 cm/min, more preferably 60 cm.

One embodiment of the present invention relates to said method, wherein the rolling drums move with similar speed if the diameter of the rolls is similar.

One specific embodiment of the present invention relates to said method, wherein the rolling drums move co- currently and/or counter-currently depending on the function of the roll, wherein each single roll can act as transportation or diversion roll.

One embodiment of the present invention relates to said method, wherein the solvent bath has an average temperature of at least 30 °C, preferably of at least 40 °C, more preferably of at least 60 °C, even more preferably of at least 80 °C even more preferably of at least 100 °C, even more preferably of at least 120 °C, even more preferably of at least 140 °C.

One further embodiment of the present invention relates to said method, wherein the temperature of the solvent bath is selected depending on the component to be solved.in particular for LDPE the solvent n-hepten is about 90°C or for PA the solvent propylene-glycol is at 140 °C, for Aluminum the solvent NaOH (5 weight%) is at 40°C.

Another embodiment of the present invention relates to said method, wherein said solvent used to dissolve first polymer component is selected from the group comprising ketones such as acetone, butanone, esters such as ethyl acetate, benzyl acetate, organic acids such as formic acid or acetic acid, water, and/or mixtures thereof.

Another embodiment of the present invention relates to said method, wherein said solvent used to dissolve first polymer component is selected from the group comprising ketones such as acetone, butanone, esters such as ethyl acetate, benzyl acetate, organic acids such as formic acid or acetic acid, water, alkanes such as n-heptane or n-octane, cyclic alkanes such as cyclohexane and methylcyclohexane, and/or mixtures thereof. In one embodiment said solvent is methylcyclohexane.

One specific embodiment of the present invention relates to said method, wherein the thermoplastic polymer is a polyolefin, in particular low-density polyethylene (LDPE) and said solvent is methylcyclohexane.

Another embodiment of the present invention relates to said method, wherein the first polymer is selected from the group comprising polyethylene (PE), polyamide (PA), polyethylene terephthalate (PET) and combinations thereof and said solvent is methylcyclohexane. In one embodiment the first polymer is selected from the group comprising polyethylene (PE), polyamide (PA), and combinations thereof and said solvent is methylcyclohexane. In another embodiment the first polymer is selected from the group comprising polyethylene (PE), polyethylene terephthalate (PET), and combinations thereof and said solvent is methylcyclohexane.

In another embodiment of the present invention the bath can be substituted with sprayers which wash out the auxiliary components of the plastic film material.

In another specific embodiment of the present invention, said method is for recycling plastic waste and is carried out in a plastic waste recycling plant.

Another embodiment of the present invention relates to said method, wherein said plastic waste recycling plant, in particular for implementing the method according to any of the aforementioned embodiments, comprising the following stations
1. a first station that comprises a shredding device for plastic waste,
2. preferably a second station for washing the shredded plastic waste,
   a third station that comprises a vessel, wherein the vessel comprises an agitator and/or a heating system and/or an organic solvent,
3. preferably a fourth station that comprises a centrifuge for solid-liquid separation,
4. a fifth station that comprises a cross-flow filtration unit having a membrane, wherein the membrane is permeable for the solvent and impermeable for some or all of the thermoplastic target polymer;
5. preferably a sixth station that comprises a plastic extruder for the production of polymer pellets,
6. wherein the plastic waste recycling plant has a transfer system that transfers materials from each station to the next in the above listed order.

Subject-matter of the present application is also a polymer material obtained by said method of the present application.

In some embodiments said roll-to-roll processing step removes any particles that weigh more than 1000 mg, in particular more than 100 mg, preferably more than 10 mg. A solid-liquid separation removes any particles that weigh more than 50 mg, in particular more than 5 mg, preferably more than 1 mg. After solid-liquid separation the suspension preferably separates into a solution comprising the target polymer and solid particles.

In some embodiments step iv) comprises removing at least 50 % of the first polymer by weight, in particular at least 90 % by weight, preferably 99 % by weight.

In some embodiments step iv) is conducted at a pressure which is lower than 6 bar, in particular less than 2 bar. In some embodiments step ii) is conducted at a pressure of 1 bar to 1.2 bar, in particular at atmospheric pressure (no extra pressure has to be applied in this case).

In some embodiments only a single first polymer is present. In other embodiments a blend of first polymers is present.

In some embodiments, said solvent used to dissolve the first polymer components is selected from the group comprising ketones such as acetone, butanone, esters such as ethyl acetate, benzyl acetate, organic acids such as formic acid or acetic acid, water and/or mixtures thereof.

In some embodiments said first polymer is dissolved in said extractant in an amount of less than 1 wt%, in particular less than 0.5 wt%, with respect to the total weight of the extractant and the polymer that is dissolved.

In some embodiments the solvent used to dissolve the first polymer component is at least partially recycled. In some embodiments the extractant for reuse is purified by evaporation of the solvent and condensation and/or by distillation, wherein impurities are removed by evaporation and the solvent remains. Often the best approach depends on the boiling point of the solvent. However, in some embodiments purification is not necessary and the solvent may be reused directly.

In some embodiments polymer pellets are formed from the solved first polymer component which is obtained by the above-mentioned separation methods. In some embodiments products such as foils, pipes, bottels, pallets, lawn grids or building materials for houses are formed from said pellets or directly from concentrated first polymer component by blow moulding, extrusion, pressing and/or injection moulding.

In some embodiments the separation of solvent from solved first polymer component by the above-mentioned separation methods comprises forming a polymer melt prior to extrusion and/or forming pellets or products using a pellet cutter after extrusion. Residual solvent is more efficiently removed from such a polymer melt.

In some embodiments separating said first polymer from the solution means that at least 50 % by weight, in particular at least 75 % by weight, preferably at least 90 % by weight of the solvent is removed. In some embodiments at least 99 % by weight of the solvent is removed.

In some embodiments of the method for recycling plastic waste at least 50 % by weight, preferably at least 80 %, by weight in particular 90 % by weight, of the plastic waste is plastic, wherein said plastic also includes the target polymer. In some embodiments at least 50 % by weight, preferably at least 80 %, by weight in particular 90 % by weight, of the plastic waste is the target polymer. In some embodiments at least 10 % by weight, preferably at least 20 % by weight, in particular 50 % by weight, of the plastic waste is non-plastic.

In a preferred embodiment the plastic waste is made to at least 80 % by weight, preferably to at least 90% by weight, of said target polymer, in particular a single polymer or a mixture of two or three polymers.

Providing said plastic material in accordance with step i) may comprise sorting said plastic material. However, in some embodiments mixed plastic waste is used and little or no sorting is done.

Alternatively or additionally according to some embodiments providing a target polymer in accordance with step i) may comprise washing of plastic waste prior to insertion of the plastic waste into the solvent, e.g. washing with water. Washing removes some impurities. In some embodiments washing is performed by means of contacting of said material with a liquid to produce a suspension with subsequent purifying the obtained suspension, in particular by means of mechanical solid-liquid separation. In some embodiments said liquid is water. In some embodiments washing may comprise washing with water at an average temperature of more than 40°C, in particular more than 80°C. Also washing with water may be a conducted using a friction washer, in particular wherein a rotor transports plastic waste and/or water is transported in opposite direction to the plastic waste. Friction by rotors and water remove impurities. In some embodiments there is no such step with a friction washer and the shredded plastic waste is used directly. This may be the case if plastic waste from post-industrial residues is recycled. With plastic waste from consumer products often said washing step is advantageous.

In some embodiments said plastic waste contains polyethylene (PE) and aluminium, preferably polyethylene, aluminium and paper. In some embodiments at least 60 % by weight, in particular at least 80 % by weight, preferably at least 90 % by weight, of the plastic waste consists of said materials.

In some embodiments the plastic waste is at least partially obtained from packaging materials and/or foils. In some embodiments at least 60 % by weight, in particular at least 80 % by weight, preferably at least 90 % by weight, of the plastic waste consists of packaging materials and/or foils.

A polymer multilayer film being passed by rolling drums is moving across several baths each filled with a certain solvent. Each solvent is selected so that a certain polymer component of the film can be dissolved in it. For example, polyethylene film comprising an aluminum layer is passed through an aqueous solution of NaOH, in which Al is dissolved. A film consisting of two polymeric components is passed through an organic solvent in which one of the components is selectively dissolved. A resulting polymer with a higher purity is delivered to an extruder for further processing.

In the present invention, complex plastics comprising numerous polymeric and non-polymeric components can be processed in a single step and in continuous-flow manner. The system of baths can be easily adjusted for a certain plastic type to be recycled so that the scope of plastic materials which can be recycled is broader in the present invention than in any of the methods of the prior art. The advantageous effect of the present invention is that it is a single process containing nearly free combinable steps for different polymers.

With the above context, the following consecutively numbered embodiments provide other specific aspects of the invention:
1. Method for removing at least one polymer component from plastic waste film material, wherein the plastic waste film material comprises at least a first polymer component to be solved and a second polymer component, wherein the method comprises the steps of
   (i) moving the plastic film material across at least one solvent bath, which is filled with a solvent, wherein the solvent is a solvent for at least the first polymer component to be solved, and wherein at least the second polymer component is non-soluble in the solvent.
2. Method according to embodiment 1, wherein the plastic film material is subject to mechanical pretreatment including a washing step.
3. Method according to any of the embodiments 1 or 2, comprising a step of decolorization of the solved first polymer component.
4. Method according to embodiments 1-3, wherein the bath and the space above said bath are arranged in a gas-tight system.
5. Method according to any of the embodiments 1 to 4, wherein the solvent bath has an average temperature of at least 30 °C, preferably of at least 40 °C, more preferably of at least 60 °C, even more preferably of at least 80 °C even more preferably of at least 100 °C, even more preferably of at least 120 °C, even more preferably of at least 140 °C.
6. Method according to embodiment 5, wherein the temperature of the solvent bath is selected depending on the component to be solved, in particular for LDPE the solvent n-hepten is about 90°C or for PA the solvent propylene-glycol is at 140 °C, for Aluminum the solvent NaOH (5 weight%) is at 40°C.
7. Method according to any of the embodiments 1 to 6, wherein the solvent is selected from the group comprising ketones such as acetone, butanone, esters such as ethyl acetate, benzyl acetate, organic acids such as formic acid or acetic acid, water and/or mixtures thereof
8. Method according to any of the embodiments 1 to 7, wherein the solvent of the least one bath is an aqueous solution, wherein said aqueous solution is selected from the group comprising acids and bases, preferably NaOH, NH3, HCl, HNO3, acetic acid and/or mixtures thereof.
9. Method according to any of the embodiments 1 to 8, wherein said first polymer component to be solved is selected from the group comprising polymeric components, additives, impurities, metal components, printing inks, adhesives and/or mixtures thereof.
10. Method according to any of the embodiments 9, wherein the first polymer component is a thermoplastic polymer.
11. Method according to any of the embodiments 10, wherein the thermoplastic polymer is a polyolefin, in particular low-density polyethylene (LDPE).
12. Method according to embodiment 9, wherein the first polymer is selected from the group comprising polyolefins, polyamide (PA) and/or combinations thereof.
13. Method according to any of the embodiments 9 or 12, wherein the first polymer is selected from the group comprising low-density polyethylene (LDPE), polypropylene (PP), high density polyethylene (HDPE), polyamide (PA) and/or combinations thereof.
14. Method according to any of the embodiments 1 to 8, wherein said second polymer component is selected from the group comprising secondary components, auxiliary components, polymeric components, additives, impurities, metal components, printing inks, adhesives and/or combinations thereof.
15. Method according to any of the embodiments 1 to 8, wherein the solvent is separated from the solved first polymer component by thermal solvent separation, mechanical solid-liquid separation, cross-flow filtration and/or Flash evaporation.
16. Method according to any of the embodiments 1 to 7, wherein the first polymer component can be further recycled by purification and extrusion.
17. Method according to any of the preceding embodiments, wherein said plastic film material is rolled material.
18. Method according to embodiment 17 wherein said plastic film material is being passed by at least a rolling drum across at least one bath which is filled with the solvent.
19. Method according to embodiment 18, wherein said rolling drums are designed/ arranged towards each other to move said plastic film material in a continuous flow across said at least one bath.
20. Method according to any of the embodiments 18 to 19, wherein said plastic film material is delivered from the rolling drums to an extruder.
21. Method according to any of the embodiments 18 to 20, wherein the rolling drums are selected from the group comprising metal drums, solid plastic drums, polymer drums, wherein the drums can be further coated on the surface.
22. Method according to any of the embodiments 18 to 21, wherein the metals of which the rolling drums are made of are selected from the group comprising steel, stainless steel, aluminium, titanium and/or mixtures thereof.
23. Method according to any of the embodiments 18 to 22, wherein the coating of the surface of the rolling drums is selected from the group comprising polymer layer like PFE, Polyamide, PTFE and/or mixtures thereof.
24. Method according to any of the embodiments 18 to 23 wherein the first rolling drum is a needle/perforate drum which is used for perforating the plastic film/material.
25. Method according to any of the embodiments 18 to 24, wherein the line speed of the rolling drums is 30 cm/min, preferably 45 cm/min, more preferably 60 cm/min.
26. Method according to any of the embodiments 1 to 25, wherein the rolling drums move with similar speed if the diameter of the rolls is similar.
27. Method according to any of the embodiments 18 to 26, wherein the rolling drums move co- currently and/or counter-currently depending on the function of the roll, wherein each single roll can act as transportation or diversion roll.
28. Method according to any of the preceding embodiments, wherein said plastic film material is selected from the group comprising plastic waste, post-industrial use polymers and combinations thereof, complex plastics comprising numerous polymeric and non-polymeric components, plastic films, multilayer films, polymer multilayer films, foils, plastic foils, multilayer foils, trays, plastic trays, multilayer trays, plastic composites, metal-plastic composites, paper-metal plastic composites, paper-plastic composites.
29. Method according to embodiment 28, wherein said plastic film is a polymeric film.
30. Method according to any of the embodiments 1 to 29, wherein the plastic film comprises at least two layers.
31. Method according to embodiment 30, wherein said film comprises polymeric components and at least one metal layer.
32. Method according to any of embodiments 28 to 31, wherein said plastic film material is selected from the group comprising PE/Al/PET, PE/PET, PE/PA, PE/PP, and/or a combination of polymer/polymer, polymer/metal, polymer/metal/polymer etc.
33. Method according to any of embodiments 30 to 32, wherein said at film comprises at least two layers, polymer/polymer or polymer/metal.
34. Method according to any of the embodiments 30 to 33, wherein said layers of the multilayer film are selected from the group comprising a layer of polymeric components, metal layers, paper layers and/or combinations thereof.
35. Method according to any of the embodiments 1 to 34, wherein said method is for recycling plastic waste and is carried out in a plastic waste recycling plant.
36. Method according to any of the embodiments 1 to 35, wherein said plastic waste recycling plant, in particular for implementing the method according to any of the aforementioned embodiments, comprising the following stations
   (i) a first station that comprises a shredding device for plastic waste,
   (ii) preferably a second station for washing the shredded plastic waste,
   (iii) a third station that comprises a vessel, wherein the vessel comprises an agitator and/or a heating system and/or an organic solvent,
   (iv) Preferably a fourth station that comprises a centrifuge for solid-liquid separation,
   (v) A fifth station that comprises a cross-flow filtration unit having a membrane, wherein the membrane is permeable for the solvent and impermeable for some or all of the thermoplastic target polymer;
   (vi) preferably a sixth station that comprises a plastic extruder for the production of polymer pellets,
      wherein the plastic waste recycling plant has a transfer system that transfers materials from each station to the next in the above listed order.
37. Polymer material obtained by a method as defined in any one of embodiments 1 to 36.

### Analytical methods

### DIFFERENTIAL SCANNING CALORIMETRY

Equipment:
DSC 214 Polyma; Netzsch

Analysis Method:
first heating curve 25-300°C with a Heating rate of 30 K/min
cooling curve 300-25°C with a Cooling rate of 30K/min
second heating curve 25-300°C with a Heating rate of 10K/min

Calculation:
Enthalpy share = Melting enthalpy of a single component / Sum of melting enthalpies of all components

Polymer component share = Sum of melting enthalpies of all components ^{∗} (Enthalpy share / (Crystallinity ^{∗} Melting enthalpy of a single component))

| **Polymer** | **Melting temperature [°C]** | **Crystallinity [%]** |
|---|---|---|
| LD-PE | 110 | 50 |
| LLD-PE | 120 | 50 |
| PA 6.66 | 206 | 35 |
| PA 6 | 225 | 35 |
| PET | 255 | 30 |

### Figure description

Figure 1:
   Presentation of the claimed method, wherein the plastic film material (6) is being passed by at least 4 rolling drums (1, 2, 3, 4) across at least one rinsing bath (7) which is filled with a solvent (5)and/or mixture thereof.
   The rolling drums are designed towards each other to move said plastic film material in a continuous flow (8) across said at least one bath. The arrows (9) indicate the direction of rotation of the rolling drum.
Figure 2: IR spectrum of the upper and bottom layers of the PE/PA film before being dissolved
Figure 3: DSC of the PE/PA film before being dissolved
Figure 4: DSC of the extracted material of the PE/PA film
Figure 5: DSC of the undissolved material of the PE/PA film
Figure 6: IR spectrum of the upper and bottom layers of the PE/PA/PE film before being dissolved
Figure 7: DSC of the PE/PA/PE film before being dissolved
Figure 8: DSC of the extracted material of the PE/PA/PE film
Figure 9: DSC of the undissolved material of the PE/PA/PE film
Figure 10: IR spectrum of the upper and bottom layers of the PE/PET film before being dissolved
Figure 11: DSC of the PE/PET film before being dissolved
Figure 12: DSC of the material extracted by methyl cyclohexane from the PE/PET film
Figure 13: DSC of the undissolved material of the PE/PET film after the extraction with methyl cyclohexane
Figure 14: DSC of the material extracted by a 50:50 v/v mixture of n-heptane and methyl cyclohexane from the PE/PET film
Figure 15: DSC of the undissolved material of the PE/PET film after the extraction with a 50:50 v/v mixture of n-heptane and methyl cyclohexane

### Examples

### Example 1

### Process for extraction of PE from plastic film waste comprising PE

1. Preparation of PE film waste by mechanical pretreatment including a washing step with water at room temperature.
2. Moving said PE film material across a rinsing bath which is filled with n-heptane at 90°C, wherein n-heptane is a solvent for the first polymer component to be solved, wherein said second polymer component is non-soluble in n-heptane in order to enrich the plastic film material with the second polymer component.
3. Dissolution of PE at 90°C in n-heptane in 60 min. For this step, the plastic film waste is treated in a stirred rinsing bath with the solvent n-heptane for 60 min.
4. The undissolved phase represents the film drawn from the rolls, no complex solid-liquid separation needs to be provided. The film is purged by air or nitrogen and dried and can then be extruded or resold as a rewound film.

### Example 2

According to this example plastic waste is provided that comprises 98 wt% transparent foil, 2 wt% colored foil, 4 wt% HDPE-Foil, and less than 0,2 wt% of metal and wood (based on total weight of solid content). The transparent foil and colored foil largely comprises LDPE. It is perforated and optionally washed and then inserted into a solvent of heptane at an average temperature of 85 to 95 °C for 60 min resulting in a suspension or solution comprising dissolved LDPE. Afterwards undissolved components of said suspension are removed by mechanical solid-liquid separation in a centrifuge. Cross-flow filtration using a membrane with a pore size of 180 kDa made out of polysulfone forms a feedstock comprising LDPE. Said feedstock may have a gel-like consistency. It is degassed and extruded resulting in LDPE polymer pellets.

### Example 3

Example for a method for recycling plastic material comprising a solvent-based extractionof a thermoplastic target polymer from a suspension or a solution, wherein a cross-flow filtration unit having a membrane is used. The following steps are performed:
1. Washing of a PE/PA-multilayer (20-90 wt% PE, mean value 70%) material from post-industrial source
2. Moving said PE/PA-multilayer s into a n-heptane solvent bath to achieve a 5wt% solution knowing rate of PE in input, where the solvent bath is under temperature at 90 °C
3. Separating dissolved polymer and plastic film comprising non-dissolved PA-
4. Adding Ethyl Acetate as polar extractant, that isn't solvent for PE with 50wt% to achieve a 10wt% polymer solution counting solvent/non-solvent system together
5. To reduce solvent content increase pressure of the solution up to 10 bar and press it through a membrane unit, applying a Polyethersulfone-membrane with a pore size >0,1 µm to enable micro filtration
6. Solution with reduced solvent content (50 wt%) extrudes in a twin-screw de-gassing extruder with a melt filtration unit. At the end of the extruder there is a underwater pelletizing system to achieve polymer pellets as a final product
7. Poly amide-flakes are directly extrudes in a twin-screw degassing extruder with melt filtration and underwater pelletizing system,

### Example 4

### Analysis of the PE/PA film

### Infrared spectroscopy

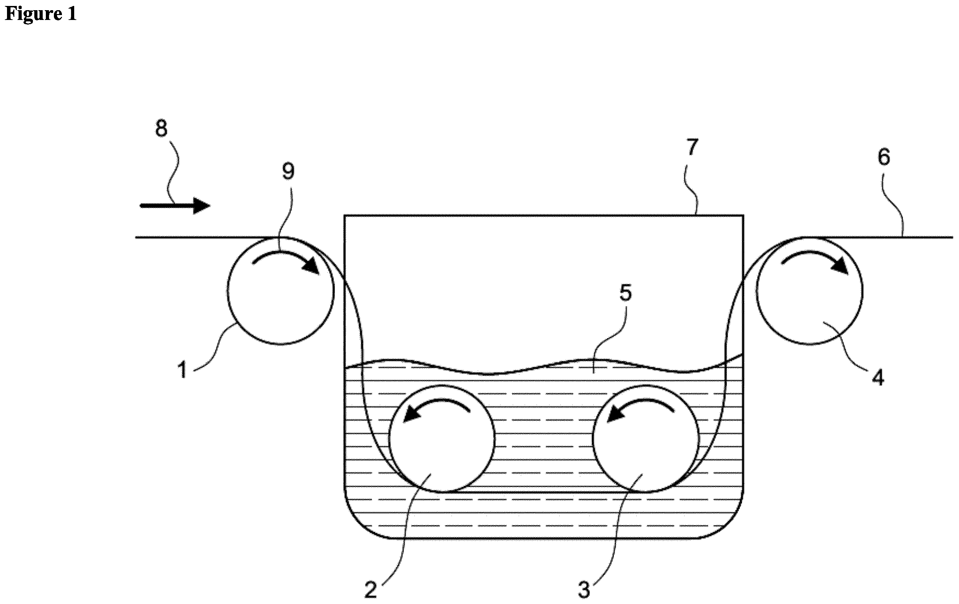

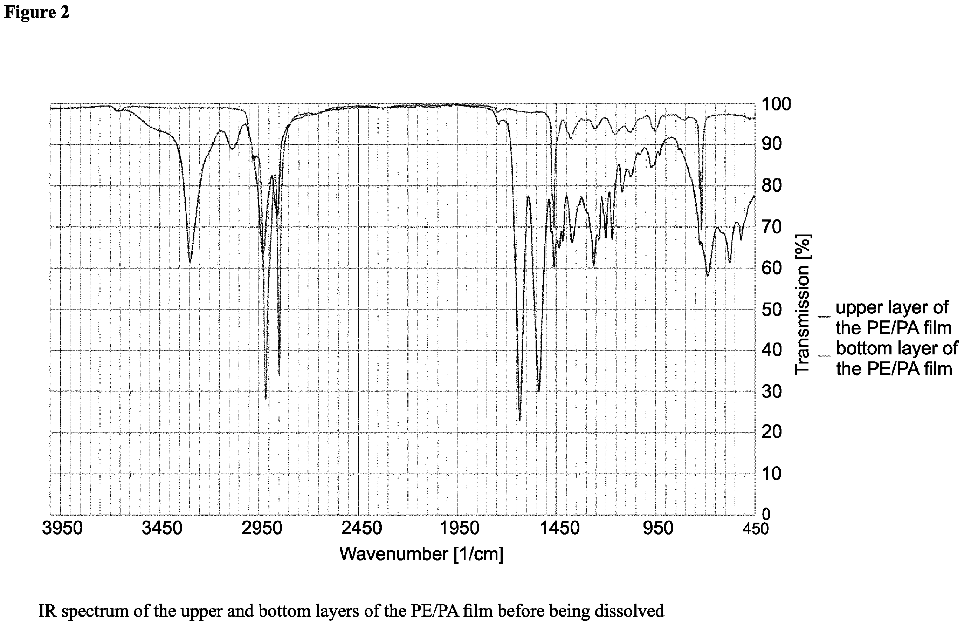

The upper and the bottom layers of the film were analyzed by attenuated total reflectance IR (Figure 2). The IR-spectrum of the upper layer corresponds to PA and the IR-spectrum of the bottom layer corresponds to PE (characteristic peaks are defined in Table 9).

**Table 9: Characteristic IR peaks of PE and PA.**

| | | | | | | | | | |
|---|---|---|---|---|---|---|---|---|---|
| LDPE/HDPE | | CH₃ | CH₂ | CH₂ | CH₂ | CH₃ | CH₃ | (CH₂)ₙ | (CH₂)ₙ |
| | Area [cm-1] | 2975-2950 | 2940-2915 | 2870-2840 | 1480-1440 | 1465-1440 | 1390-1370 | 732-728 | 722-712 |
| PA6 | | NH | CH₂ | CH₂ | C=O | NH-C=O | CH₂ | (CH₂)ₙ | (CH₂)ₙ |
| | Area [cm-1] | 3300-3000 | 2940-2915 | 2870-2840 | 1641 | 1542 | 1480-1440 | 732-728 | 722-712 |

### Differential scanning calorimetry

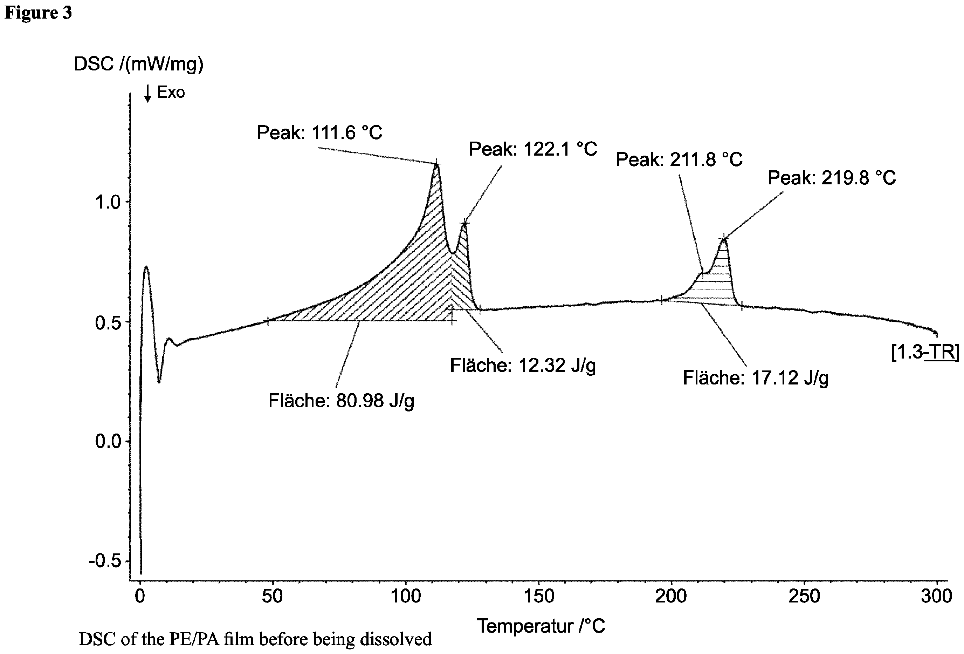

### The material was analyzed by differential scanning calorimetry (Figure 3)

According to the DSC analysis, the material has the following composition:

**Table 10. Composition of the PA/PE material**

| Sample | Peak of the Melting area | | Identified Component | Calculated Mass fraction | |
|---|---|---|---|---|---|
| PA/PE | 111,6 | °C | LDPE | 65 | % |
| | 122,1 | °C | LLDPE | 10 | % |
| | 219,8 | °C | PA 6 | 25 | % |

Based on the IR and DSC data, the analyzed film contains at least two layers: the upper layer of PA and the bottom layer of PE.

### Process for extraction of PE from PE/PA film

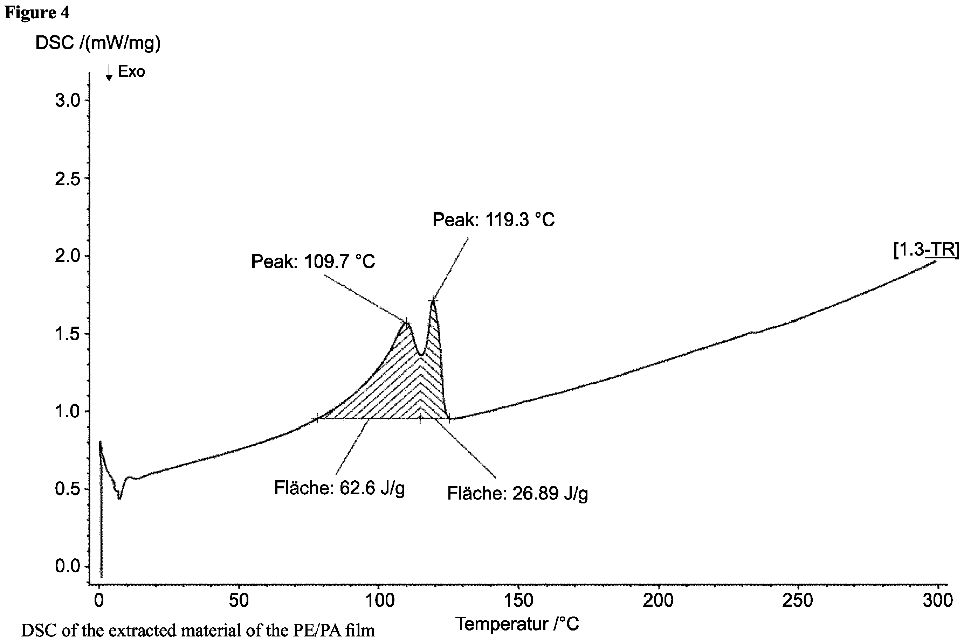

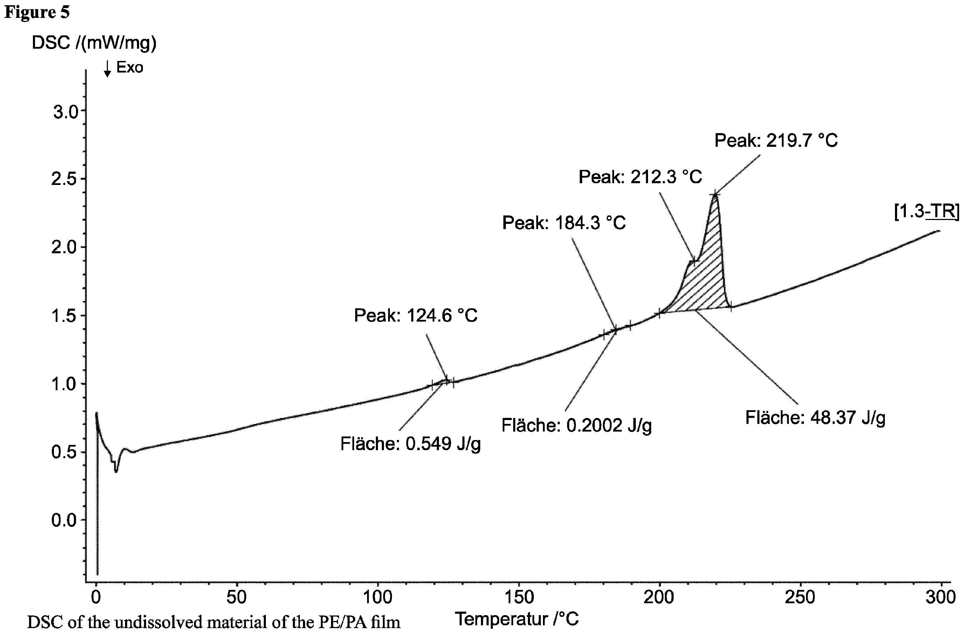

640 g of methylcyclohexane was poured into a beaker. The solvent was heated to 95 °C. A sample of a PE/PA film with the dimensions 7 × 26 cm was fixed on a cylindrical base and placed into a solvent bath for 30 minutes under stirring. The cylindrical base was freely transmissible for the solvent. After that the undissolved material was removed and the solvent was evaporated under reduced pressure to obtain the extracted material. The extracted material and the undissolved material were analyzed by DSC (Figures 4 and 5).

Fixing the film on a cylindrical base provides the fixed and directed path of the film through a solvent bath, prevents rolling the material up and ensures that the largest possible surface area of the film is in contact with the solvent. An unfixed material tends to roll up due to the different expansion of the film polymeric conponents and bends in the direction of the material that has the lower coefficient of linear expansion. Fixing the film on the cylindrical base prevents this process and serves for perfect modelling the conditions of a process, in which a plastic film material is being passed at least a rolling drum across at least one solvent bath. As a result, tensions in the material arise, which promote the penetration of the solvent into the material and hence increase the yield of the dissolution and decrease the dissolution time, thus improving the efficiency of the dissolution process.

The results of the experiments are summarized in Table 11.

**Table 11. Overview of the experiments with the fixed PE/PA film and an edge length of 7 x 26 cm**

| | Experiment 1 | | Experiment 2 | | Experiment 3 | |
|---|---|---|---|---|---|---|
| Mass of solvent | 640,52 | g | 640 | g | 640,53 | g |
| Temperature of solvent | 95 | °C | 95 | °C | 95 | °C |
| Stirring time | 30 | min | 30 | min | 30 | min |
| Initial mass of foil | 4,72 | g | 5,02 | g | 4,61 | g |
| Mass of dissolved fraction | 3,01 | g | 3,2 | g | 3,1 | g |
| Mass of undissolved fraction | 1,53 | g | 1,66 | g | 1,52 | g |
| Theoretical yield (PE) | 3,53 | g | 3,75 | g | 3,44 | g |
| Yield | 85,4 | % | 85,3 | % | 90,0 | % |

The results of the DSC analyses of the dissolved and undissolved materials are summarized in Table 12.

**Table 12. Overview of the DSC analyses of the dissolved and undissolved components.**

| | LDPE | | LLDPE | | PA | |
|---|---|---|---|---|---|---|
| Experiment 1 dissolved | 68 | % | 32 | % | 0 | % |
| Experiment 1 undissolved | 0 | % | 3 | % | 97 | % |
| Experiment 2 dissolved | 70 | % | 30 | % | 0 | % |
| Experiment 2 undissolved | 0 | % | 9 | % | 91 | % |
| Experiment 3 dissolved | 70 | % | 30 | % | 0 | % |
| Experiment 3 undissolved | 0 | % | 1 | % | 99 | % |

### Example 5

### Analysis of the PE/PA/PE film

### Infrared spectroscopy

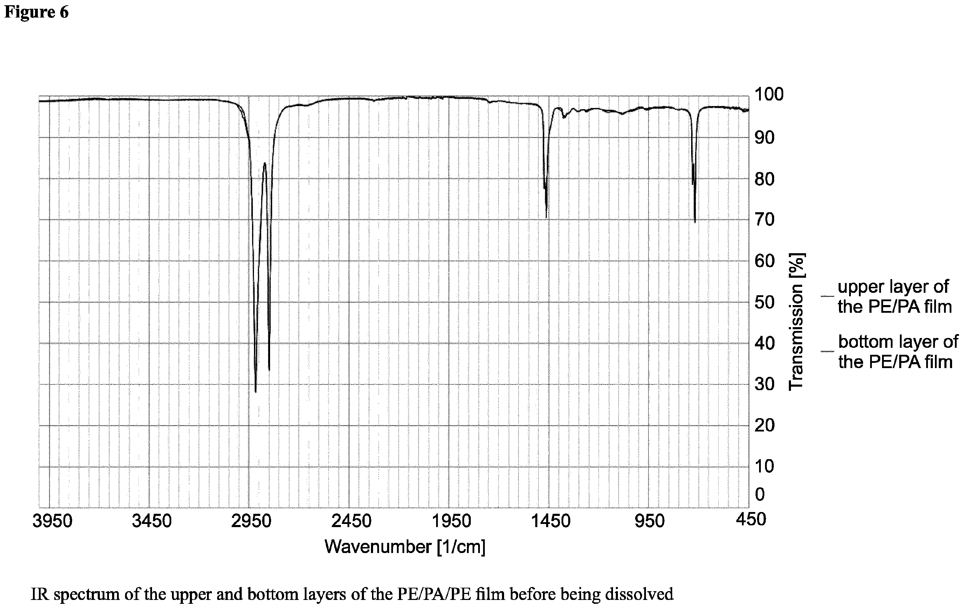

The upper and the bottom layers of the film were analyzed by attenuated total reflectance IR (Figure 6). The IR-spectra of the upper layer and the bottom layer correspond to PE (characteristic IR peaks are defined in Table 9).

### Differential scanning calorimetry

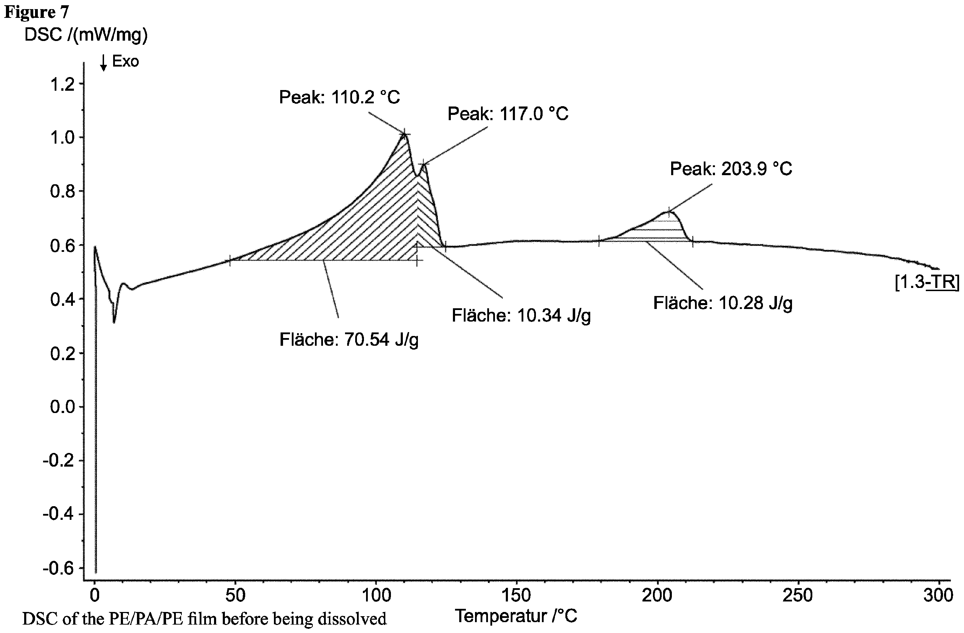

The material was analyzed by differential scanning calorimetry (Figure 7).

According to the DSC analysis, the material has the following composition:

**Table 13. Composition of PE/PA/PE material.**

| Sample | Melting point | | Component | Mass fraction | |
|---|---|---|---|---|---|
| PE/PA/PE | 109,4 | °C | LDPE | 46 | % |
| | 117,1 | °C | LLDPE | 33 | % |
| | 206,2 | °C | PA 6.66 | 22 | % |

Presence of PA was confirmed. Based on the IR and DSC data, the analyzed film contains at least three layers: the upper and the bottom layers of PE and the middle layer of PA.

### Process for extraction of PE from PE/PA/PE film

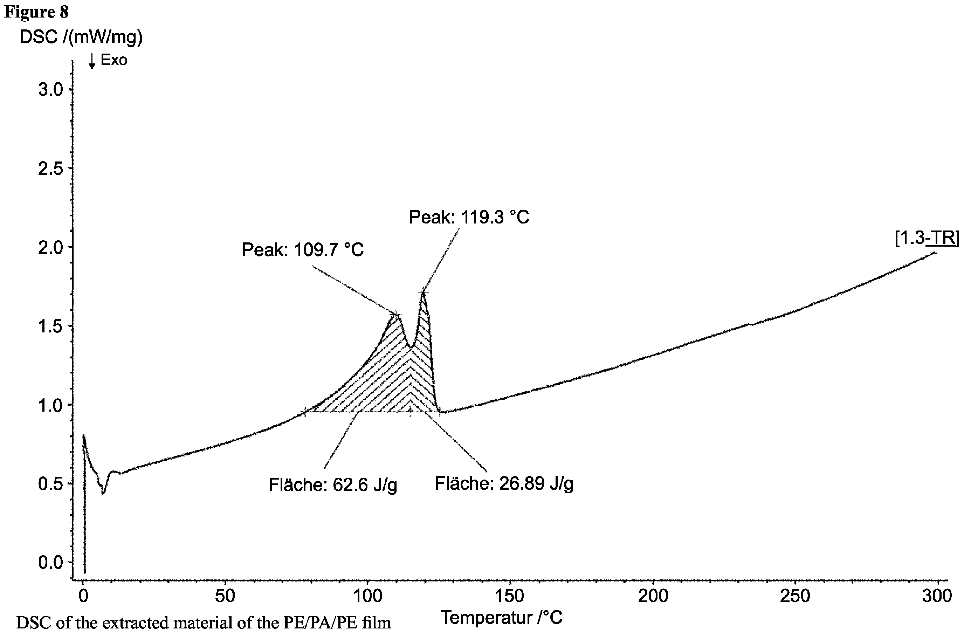

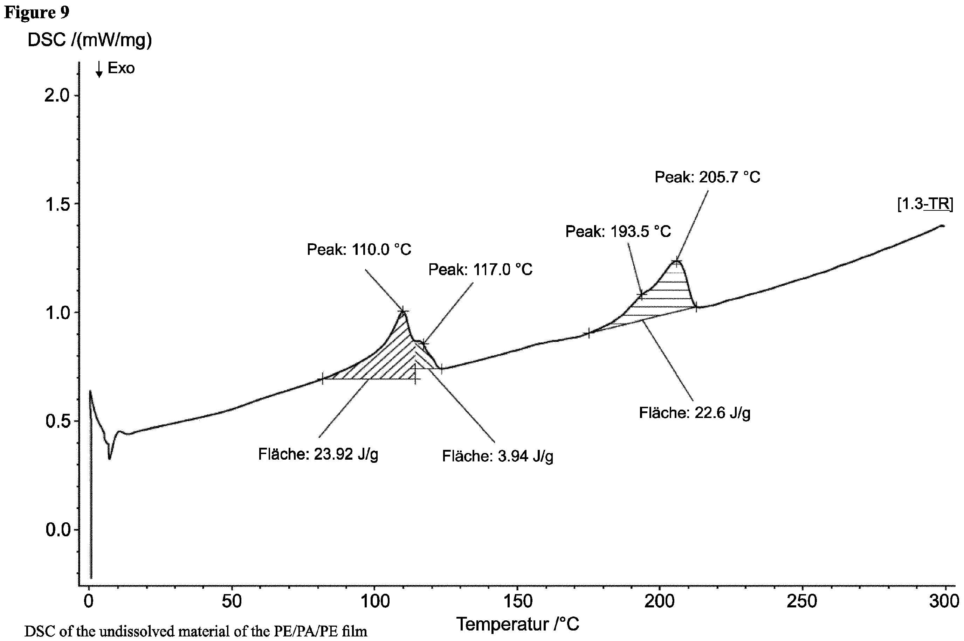

The extraction of PE from a PE/PA/PE film was performed analogously to Example 4. The extracted material and the undissolved material were analyzed by DSC (Figures 8 and 9).

The results of the experiments are summarized in Table 14.

**Table 14. Overview of the experiments with the fixed PE/PA/PE film and an edge length of 7 × 26 cm**

| | Experiment 1 | | Experiment 2 | | Experiment 3 | |
|---|---|---|---|---|---|---|
| Mass of solvent | 640,06 | g | 640,14 | g | 640,48 | g |
| Temperature of solvent | 95 | °C | 95 | °C | 95 | °C |
| Stirring time | 30 | min | 30 | min | 30 | min |
| Initial mass of foil | 3,42 | g | 3,07 | g | 2,72 | g |
| Mass of dissolved fraction | 1,13 | g | 1 | g | 0,9 | g |
| Mass of undissolved fraction | 2,16 | g | 1,96 | g | 1,8 | g |
| Theoretical yield (PE) | 2,68 | g | 2,40 | g | 2,13 | g |
| Yield | 42,2 | % | 41,6 | % | 42,3 | % |

The results of the DSC analyses of the dissolved and undissolved materials are summarized in Table 15.

**Table 15. Overview of the DSC analyses of the dissolved and undissolved components.**

| | LDPE | LLDPE | PA |
|---|---|---|---|
| Experiment 1 dissolved | 67 % | 33 % | 0 % |
| Experiment 1 undissolved | 34 % | 6 % | 60 % |
| Experiment 2 dissolved | 68 % | 32 % | 0 % |
| Experiment 2 undissolved | 29 % | 7 % | 64 % |
| Experiment 3 dissolved | 65 % | 35 % | 0 % |
| Experiment 3 undissolved | 27 % | 6 % | 67 % |

### Example 6

### Analysis of PE/PET film

### Infrared spectroscopy

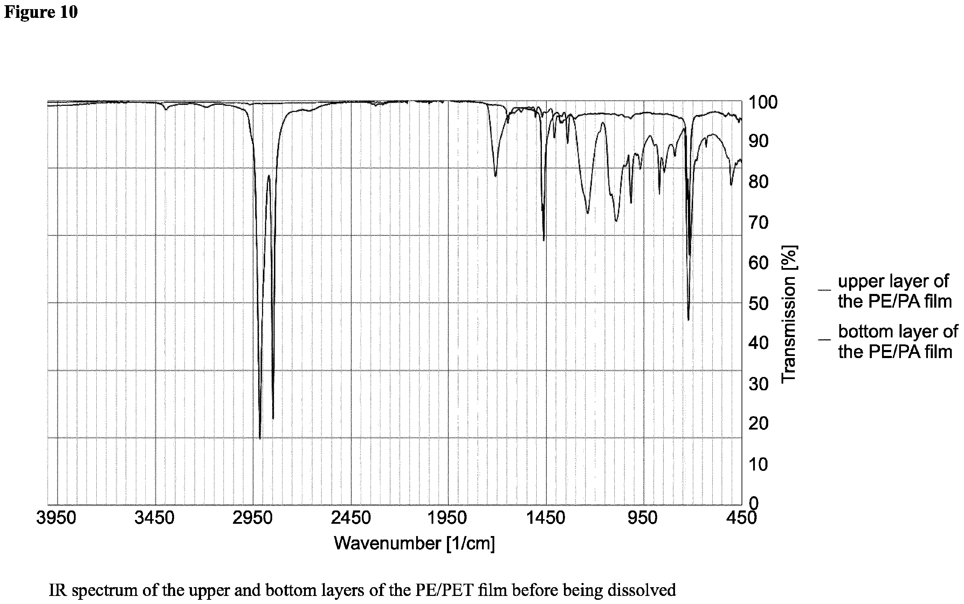

The upper and the bottom layers of the film were analyzed by attenuated total reflectance IR (Figure 10). The IR-spectrum of the upper layer corresponds to PET and the IR-spectrum of the bottom layer corresponds to PE (characteristic peaks are defined in Table 16).

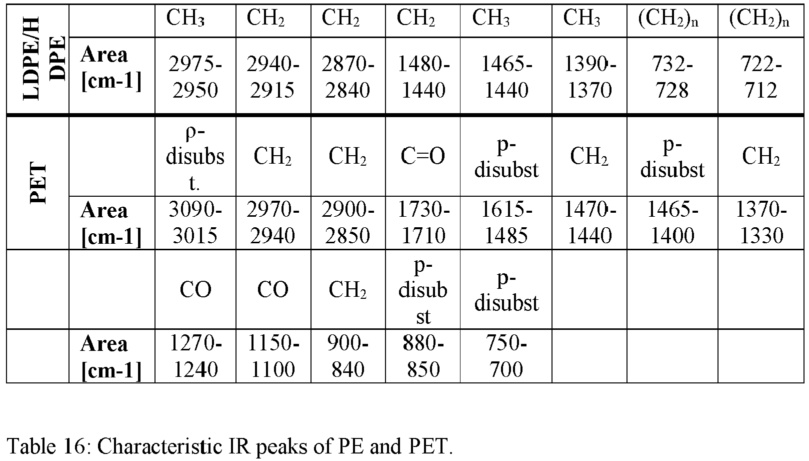

### Differential scanning calorimetry

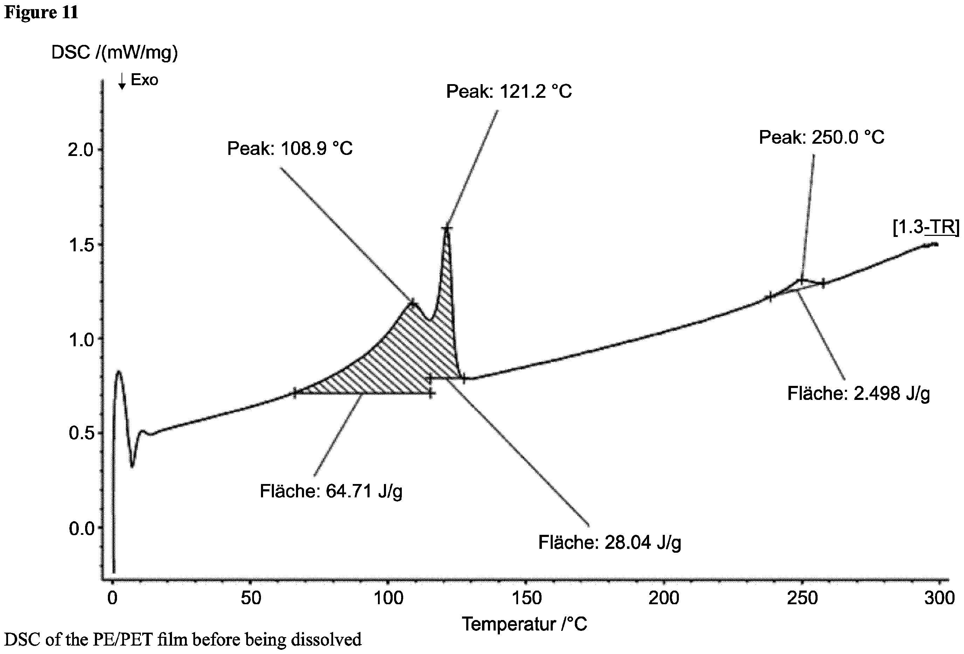

The material was analyzed by differential scanning calorimetry (Figure 11).

According to the DSC analysis, the material has the following composition:

| Sample | Melting point | | Component | Mass fraction | |
|---|---|---|---|---|---|
| PE/PET | 108,9 | °C | LDPE | 64 | % |
| | 121,2 | °C | LLDPE | 27 | % |
| | 250,0 | °C | PET | 9 | % |

Based on the IR and DSC data, the analyzed film contains at least two layers: the upper layer of PET and the bottom layer of PE.

### Process for extraction of PE from PE/PET film

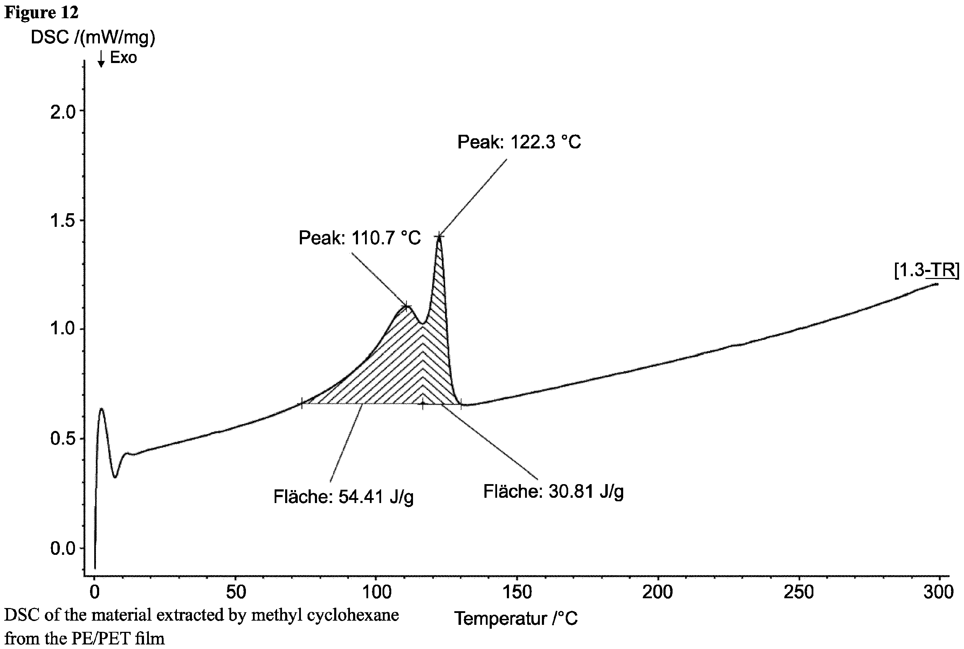

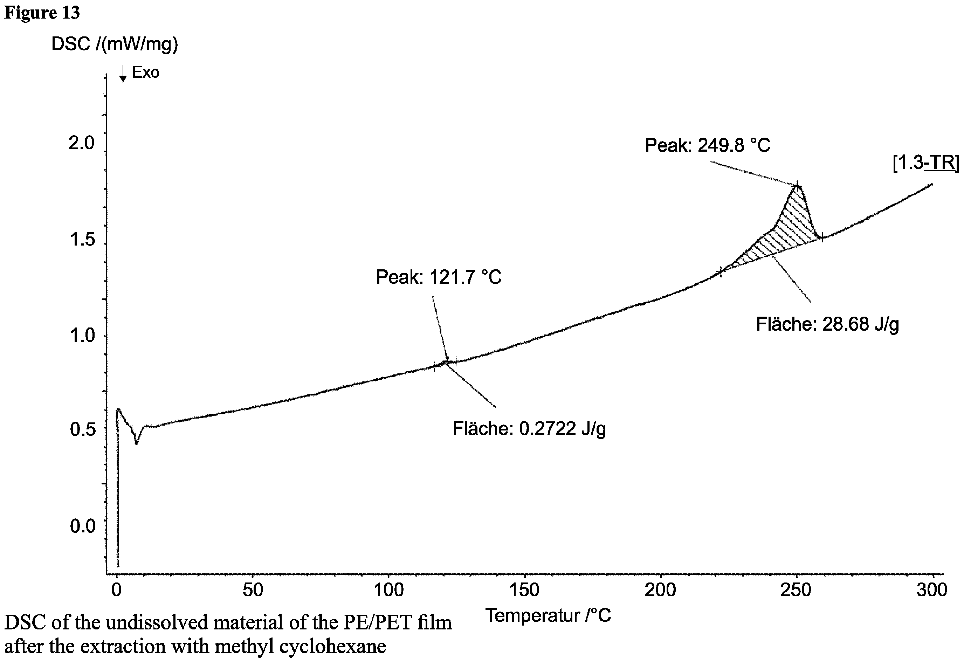

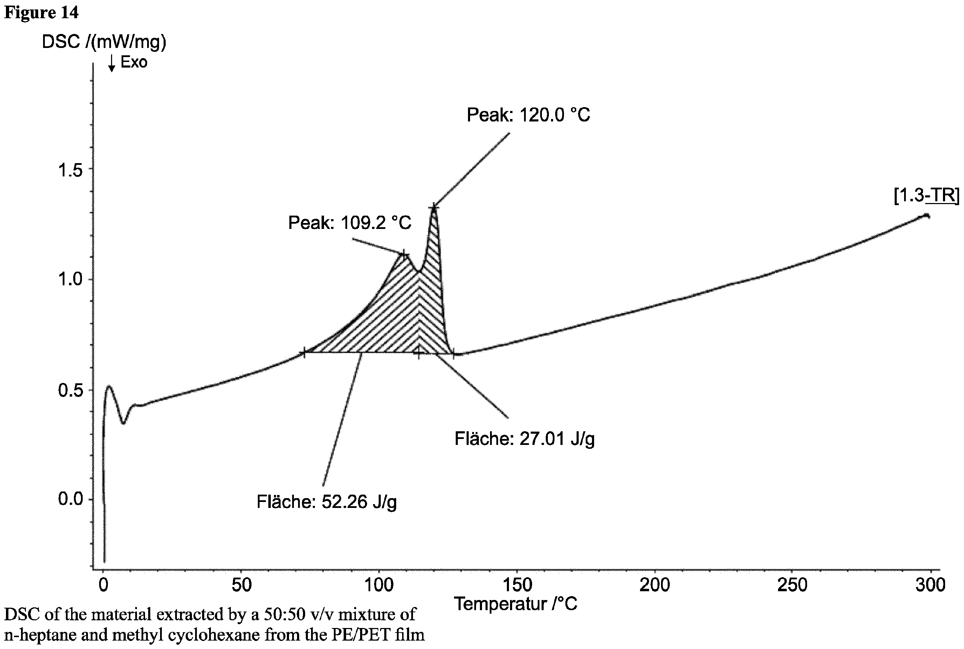

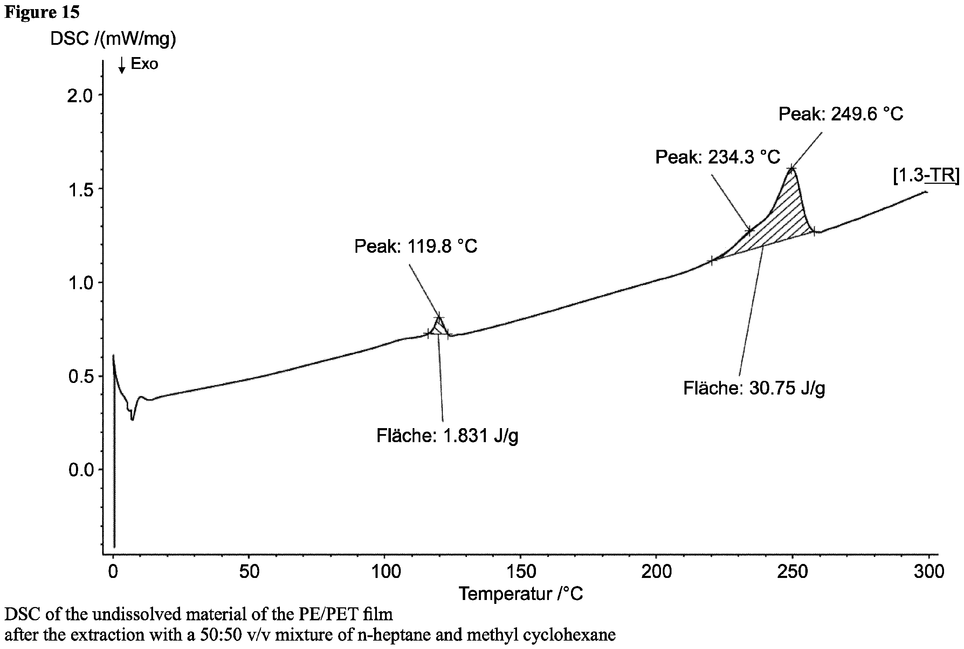

The extraction of PE from a PE/PET film was performed analogously to Example 4 with two different extraction media: methyl cyclohexane and a 50:50 v/v mixture of n-heptane and methyl cyclohexane. The extracted material and the undissolved material were analyzed by DSC (Figures 12-15).

The results of the experiments are summarized in Tables 17 and 18.

**Table 17. Overview of the experiments with the fixed PE/PET film and an edge length of 7^{∗}26 cm (extraction with methyl cyclohexane).**

| Solvent: methyl cyclohexane | Experiment 1 | | Experiment 2 | | Experiment 3 | |
|---|---|---|---|---|---|---|
| Mass of solvent | 640,3 | g | 640,63 | g | 640,35 | g |
| Temperature of solvent | 95 | °C | 95 | °C | 95 | °C |
| Stirring time | 30 | min | 30 | min | 30 | min |
| Initial mass of foil | 3,61 | g | 2,27 | g | 2 | g |
| Mass of dissolved fraction | 2,29 | g | 1,7 | g | 1,46 | g |
| Mass of undissolved fraction | 0,48 | g | 0,38 | g | 0,32 | g |
| Theoretical yield (PE) | 3,30 | g | 2,07 | g | 1,83 | g |
| Yield | 69,48 | % | 82,03 | % | 79,96 | % |

**Table 18. Overview of the experiments with the fixed PE/PET film and an edge length of 7^{∗}26 cm and (extraction with a 50:50 v/v mixture of n-heptane and methyl cyclohexane).**

| Solvent: n-heptane/ methyl cyclohexane | Experiment 1 | | Experiment 2 | | Experiment 3 | |
|---|---|---|---|---|---|---|
| Mass of solvent | 643,15 | g | 640,06 | g | 641,34 | g |
| Temperature of solvent | 95 | °C | 95 | °C | 95 | °C |
| Stirring time | 30 | min | 30 | min | 30 | min |
| Initial mass of foil | 2,07 | g | 2,11 | g | 2,02 | g |
| Mass of dissolved fraction | 1,49 | g | 1,57 | g | 1,46 | g |
| Mass of undissolved fraction | 0,35 | g | 0,38 | g | 0,4 | g |
| Theoretical yield (PE) | 1,89 | g | 1,93 | g | 1,84 | g |
| Yield | 78,84 | % | 81,50 | % | 79,16 | % |

The results of the DSC analyses of the dissolved and undissolved materials are summarized in Tables 19 and 20.

**Table 19. Overview of the DSC analyses of the dissolved and undissolved components (extraction with methyl cyclohexane).**

| | LDPE | | LLDPE | | PET | |
|---|---|---|---|---|---|---|
| Experiment 1 dissolved | 64 | % | 36 | % | 0 | % |
| Experiment 1 undissolved | 0 | % | 1 | % | 99 | % |
| Experiment 2 dissolved | 72 | % | 23 | % | 0 | % |
| Experiment 2 undissolved | 0 | % | 0 | % | 100 | % |
| Experiment 3 dissolved | 56 | % | 44 | % | 0 | % |
| Experiment 3 undissolved | 0 | % | 0 | % | 100 | % |

**Table 20. Overview of the DSC analyses of the dissolved and undissolved components (extraction with a 50:50 v/v mixture of n-heptane and methyl cyclohexane).**

| | LDPE | | LLDPE | | PET | |
|---|---|---|---|---|---|---|
| Experiment 1 dissolved | 66 | % | 33 | % | 0 | % |
| Experiment 1 undissolved | 12 | % | 23 | % | 66 | % |
| Experiment 2 dissolved | 71 | % | 29 | % | 0 | % |
| Experiment 2 undissolved | 0 | % | 2 | % | 98 | % |
| Experiment 3 dissolved | 53 | % | 47 | % | 0 | % |
| Experiment 3 undissolved | 26 | % | 25 | % | 49 | % |

## Claims

1. Method for removing at least one polymer component from plastic waste film material, wherein the plastic waste film material comprises at least a first polymer component to be solved and a second polymer component, wherein the method comprises the steps of
(i) moving the plastic film material across at least one solvent bath, which is filled with a solvent, wherein the solvent is a solvent for at least the first polymer component to be solved, and wherein at least the second polymer component is non-soluble in the solvent, wherein said plastic film material is rolled material,
and wherein said plastic film material is being passed by at least a rolling drum across at least one bath which is filled with the solvent.

2. Method according to claim 1, wherein the plastic film material is subject to mechanical pretreatment including a washing step.

3. Method according to any of the claims 1 or 2, comprising a step of decolorization of the solved first polymer component.

4. Method according to any of the claims 1 to 3, wherein the bath and the space above said bath are arranged in a gas-tight system.

5. Method according to any of the claims 1-4, wherein the solvent bath has an average temperature of at least 30 °C, preferably of at least 40 °C, more preferably of at least 60 °C, even more preferably of at least 80 °C even more preferably of at least 100 °C, even more preferably of at least 120 °C, even more preferably of at least 140 °C.

6. Method according to any of the claims 1 to 5, wherein the solvent is selected from the group comprising ketones such as acetone, butanone, esters such as ethyl acetate, benzyl acetate, organic acids such as formic acid or acetic acid, alkanes such as n-heptane or n-octane, cyclic alkanes such as cyclohexane and methylcyclohexane, water and/or mixtures thereof.

7. Method according to any of the claims 1 to 6, wherein the solvent of the least one bath is an aqueous solution, wherein said aqueous solution is selected from the group comprising acids and bases, preferably NaOH, NH3, HCl, HN03, acetic acid and/or mixtures thereof.

8. Method according to any of the claims 1-7, wherein said first polymer component to be solved is selected from the group comprising polymeric components, additives, impurities, metal components, printing inks, adhesives and/or mixtures thereof.

9. Method according to claim 8, wherein the first polymer is selected from the group comprising low-density polyethylene (LDPE), polypropylene (PP), high density polyethylene (HDPE), polyamide (PA) and/or combinations thereof.

10. Method according to any of the claims 1 to 7, wherein said second polymer component is selected from the group comprising secondary components, auxiliary components, polymeric components, additives, impurities, metal components, printing inks, adhesives and/or combinations thereof.

11. Method according to any of the claims 1 to 7, wherein the solvent is separated from the solved first polymer component by thermal solvent separation, mechanical solid-liquid separation, cross-flow filtration and/or Flash evaporation.

12. Method according to claim 11, wherein said plastic film material is delivered from the rolling drum(s) to an extruder.

13. Method according to any of the preceding claims, wherein said plastic film material is selected from the group comprising plastic waste, post-industrial use polymers and combinations thereof, complex plastics comprising numerous polymeric and non-polymeric components, plastic films, polymeric film, multilayer films, polymer multilayer films, foils, plastic foils, multilayer foils, trays, plastic trays, multilayer trays, plastic composites, metal-plastic composites, paper-metal plastic composites, paper-plastic composites.

14. Method according to claim 13, wherein said plastic film material is selected from the group comprising PE/Al/PET, PE/PET, PE/PA, PE/PP, and/or a combination of polymer/polymer, polymer/metal, polymer/metal/polymer etc.

15. Method according to claim 14, wherein said film comprises at least two layers, polymer/polymer or polymer/metal.

16. Method according to claim 14 or 15, wherein said layers of the multilayer film are selected from the group comprising a layer of polymeric components, metal layers, paper layers and/or combinations thereof.
